# EUROPEAN PATENT SPECIFICATION

(11) **EP 4 386 344 B1**
(45) Date of publication and mention of the grant of the patent: **13.08.2025**
(21) Application number: 23780509.8
(22) Date of filing: 28.03.2023
(51) Int. Cl.: B29C 63/04, G01L 1/14, B62D 1/06, H05B 3/20, H05K 1/02

(54) **ELASTOMER SHEET AND ELECTROSTATIC SENSOR**
ELASTOMERFOLIE UND ELEKTROSTATISCHER SENSOR
FEUILLE ÉLASTOMÈRE ET CAPTEUR ÉLECTROSTATIQUE

(30) Priority: 30.03.2022 JP 2022056307
(43) Date of publication of application: 19.06.2024
(73) Proprietor: Sumitomo Riko Company Limited, Komaki-shi, Aichi 485-8550 (JP)
(72) Inventor: OKUMURA, Takemasa, Komaki-shi, Aichi 485-8550 (JP); NASU, Masaki, Komaki-shi, Aichi 485-8550 (JP)
(74) Representative: Becker, Eberhard
(86) International application number: PCT/JP2023/012484
(87) International publication number: WO 2023/190500

(56) References cited:
- WO-A1-2014/123222
- WO-A1-2014/123222
- JP-A- 2016 016 790
- JP-A- 2016 027 532
- JP-A- S6 333 122
- US-A- 4 788 759
- US-A1- 2022 090 982

## Description

### Technical Field

The present disclosure relates to an elastomer sheet and an electrostatic sensor.

### Related Art

Patent Document 1 discloses a technology in which a sheet is wound around a winding target member having a three-dimensional curved surface. Patent Document 1 describes an example in which the winding target member is a steering wheel.

When the sheet is wound around the winding target member having the three-dimensional curved surface, there is a concern that relatively large wrinkles may nonuniformly occur in the sheet. The reason is that the three-dimensional curved surface is not a curved surface that can be developed into a plane without expanding or contracting. Hence, when a planar sheet is wound around the three-dimensional curved surface, a portion that differs in a peripheral length of the sheet occurs in any portion of the sheet. In the technology described in Patent Document 1, by forming a cut in a portion of an extendable sheet that is wound around an inner peripheral portion of the steering wheel, the difference in peripheral length is absorbed by the cut. Accordingly, it is expected to reduce the occurrence of wrinkles.

### Prior-Art Documents

### Patent Documents

Patent Document 1: Japanese Patent Laid-open No. 2016-16790

### SUMMARY OF THE INVENTION

### Problems to Be Solved by the Invention

However, even with the above technology, it is difficult to wind the sheet while following the curved surface of the winding target member. The reason is that, at an outer peripheral portion of the steering wheel, the sheet is wound while being extended; in contrast, at the inner peripheral portion of the steering wheel, the sheet is wound while being compressed and having the difference in peripheral length absorbed by the cut. In this way, when a single sheet is wound while an effort is made to prevent wrinkles from occurring, it is very troublesome to wind the sheet around the winding target member in such a manner that the sheet is extended at a certain portion and is compressed at another portion. Hence, it has been desired to improve efficiency of the work of winding the sheet.

The present disclosure has been made in view of this background, and aims to provide an elastomer sheet and an electrostatic sensor in which the efficiency of the winding work is improved. Means for Solving the Problems

One aspect of the present disclosure provides an elastomer sheet which is made of an elastomer and is wound around a winding target member having a three-dimensional curved surface. The elastomer sheet includes: a central region, located in a center of the elastomer sheet in a winding direction; and a pair of end regions, located at an end of the elastomer sheet in the winding direction. The central region and the pair of end regions are formed in which a sectional shape of the elastomer sheet taken along a cross direction crossing the winding direction is a wave-like shape extendable or compressible in the cross direction. A rate of extension or compression of the central region and a rate of extension or compression of the pair of end regions with respect to the cross direction are configured to differ from each other.

Another aspect of the present disclosure provides an electrostatic sensor using the above elastomer sheet.

### Effects of the Invention

According to one aspect of the present disclosure, a wave-like shape is formed in the elastomer sheet. By deformation so as to increase a wavelength of the wave-like shape, the elastomer sheet can be easily extended compared to the case of extending the elastomer sheet itself. Similarly, by deformation so as to reduce the wavelength of the wave-like shape, the elastomer sheet can be easily compressed compared to the case of compressing the elastomer sheet itself. The above wave-like shape is configured so that the rate of extension or compression of the central region of the elastomer sheet and the rate of extension or compression of the pair of end regions differ from each other. Accordingly, by simple work of widening or narrowing the wave-like shape that is formed in advance, the extension rate or compression rate of the central region and the pair of end regions in the elastomer sheet can be changed. As a result, the efficiency of the work of winding the elastomer sheet can be improved.

According to another aspect of the present disclosure, since it is possible to apply the elastomer sheet of the present disclosure to an electrostatic sensor, the efficiency of the work of winding the electrostatic sensor around a winding target can be improved.

As described above, according to the present embodiment, an elastomer sheet and an electrostatic sensor can be provided in which the efficiency of the winding work is improved.

Reference numerals in parentheses in the claims indicate correspondence with specific means described in the embodiments described later, and do not limit the technical scope of the present disclosure.

### BRIEF DESCRIPTION OF THE DRAWINGS

FIG. 1 is a front view showing a steering of Embodiment 1.
FIG. 2 is a sectional view taken along line II-II in FIG. 1.
FIG. 3 is a plan view showing an electrostatic sensor of Embodiment 1.
FIG. 4 is a sectional view taken along line IV-IV in FIG. 3.
FIG. 5 is a plan view showing an elastomer sheet of Embodiment 1.
FIG. 6 is a partially enlarged plan view showing the elastomer sheet of Embodiment 1.
FIG. 7 is sectional views taken along line A-A to line G-G in FIG. 6.
FIG. 8 is a sectional view taken along line VIII-VIII in FIG. 2.
FIG. 9 is a partially enlarged plan view showing an elastomer sheet of Embodiment 2.
FIG. 10 is a sectional view corresponding to line VIII-VIII in FIG. 2 in Embodiment 2.
FIG. 11 is a partially enlarged plan view showing an elastomer sheet of Embodiment 3.
FIG. 12 is a sectional view corresponding to line VIII-VIII in FIG. 2 in Embodiment 3.
FIG. 13 is a sectional view showing an end region of an elastomer sheet of Embodiment 4.
FIG. 14 is a sectional view corresponding to line II-II in FIG. 1 in Embodiment 5.
FIG. 15 is a sectional view showing an electrostatic sensor of Embodiment 6.
FIG. 16 is a plan view showing an electrostatic sensor of Embodiment 7.
FIG. 17 is a sectional view showing the electrostatic sensor of Embodiment 7.
FIG. 18 is a front view showing a substantially D-shaped steering according to another embodiment.
FIG. 19 is a front view showing a square-shaped steering according to another embodiment.

### DESCRIPTION OF THE EMBODIMENTS

### (Embodiment 1)

### 1. Application Object

An electrostatic sensor of the present embodiment has a configuration including an elastomer sheet and an electrode layer that is a separate member from the elastomer sheet, or a configuration including an elastomer sheet that includes an elastomer layer and an electrode layer, or the like. The elastomer sheet or the electrostatic sensor is attached to, for example, an attachment surface of a base material. The base material is any member and is made of metal, resin, or any other material.

In the present embodiment, the attachment surface of the base material is formed in a three-dimensional shape such as a curved surface, a composite plane (a shape formed by a plurality of planes), or a composite shape of a plane and a curved surface.

The elastomer sheet is arranged on the attachment surface (surface) of the base material. The elastomer sheet is flexible as a whole. That is, the elastomer sheet has flexibility and is configured to be extendable in a plane direction.

The elastomer sheet or the electrostatic sensor is configured to function as a sensor by utilizing a change in capacitance between a pair of target electrodes. It is sufficient if the elastomer sheet or the electrostatic sensor includes at least one of the pair of target electrodes, and is not limited to the configuration including a pair of target electrodes. In the present embodiment, the electrostatic sensor is configured to include a shield electrode.

The electrostatic sensor can be configured as, for example, a sensor that detects external pushing force or the like or a sensor that detects contact or approach of a conductor having a potential, by utilizing a change in capacitance between target electrodes.

In the case of the electrostatic sensor detecting pushing force, the capacitance between the target electrodes changes due to deformation of an insulator caused by input of external pushing force, vibration, and sound or the like (hereinafter external pushing force or the like). By detecting a voltage according to the capacitance between the target electrodes, the external pushing force or the like is detected.

If the electrostatic sensor is configured as a sensor that detects contact or approach, the capacitance between the target electrodes changes due to contact or approach of a conductor having a potential. By detecting a voltage according to the changed capacitance between the target electrodes, the contact or approach of said conductor is detected.

The electrostatic sensor can be applied to, for example, a surface of a mouse or joystick which is a pointing device, or a surface of a vehicle part. Examples of the vehicle part include an armrest, a doorknob, a shift lever, a steering, a door trim, a center trim, a center console, and a ceiling. In the present embodiment, a case is described where the electrostatic sensor is attached to a steering. The steering is an example of a winding target member. In many cases, the winding target member is made of an inflexible material such as metal or hard resin. The electrostatic sensor can be configured to detect a state of a target.

In the present embodiment, the electrostatic sensor has a heater function. Accordingly, the electrostatic sensor is able to apply heat to the target in addition to detecting the state of the target.

### 2. Structure of Steering 10

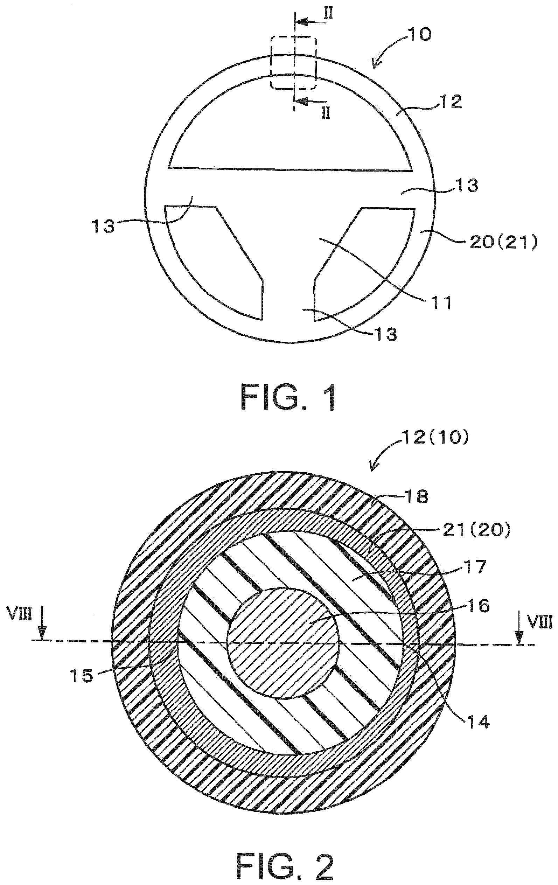

A structure of the steering 10 is described with reference to FIG. 1 to FIG. 2. As shown in FIG. 1, the steering 10 includes a core part 11, a ring part 12, and a plurality of connecting parts 13, 13, and 13 that connect the core part 11 with the ring part 12. The ring part 12 has a sensor function that detects contact from a human hand.

The ring part 12 is a shaft member whose central axis is a convex curve. The ring part 12 of the present embodiment is formed in a circular ring shape. In the present embodiment, the circular ring shape is regarded as an example of the convex curve. A surface on a side far from a center of curvature of the ring part 12 is regarded as an outer peripheral surface 14 of the ring part 12, and a surface on a side close to the center of curvature of the ring part 12 is regarded as an inner peripheral surface 15 of the ring part 12. However, the ring part 12 is not limited to a circular shape, and can be formed in any shape. As shown in FIG. 2, an axially perpendicular sectional shape of the ring part 12 is, for example, a circular shape. Accordingly, a surface of the ring part 12 is not a single plane and has a three-dimensional curved surface over the entire surface.

A detailed configuration of the steering 10 is described with reference to FIG. 2. Particularly, a detailed configuration of the ring part 12 is described.

The ring part 12 includes a core body 16, a resin inner layer material 17, an elastomer sheet 21, and a skin material 18. The core body 16 constitutes a center portion of the ring part 12 and is formed in a shape corresponding to the shape of the ring part 12. That is, the core body 16 is formed in a circular ring shape and has an axially perpendicular section of a circular shape. Accordingly, a surface of the core body 16 is not a single plane and has a curved surface over the entire surface. Here, the axially perpendicular sectional shape of the core body 16 is not limited to a circular shape, and may be any shape such as an elliptical shape, an egg shape, a U-shape, a C-shape, and a polygonal shape. The core body 16 of the present embodiment is made of metal such as aluminum or magnesium, and is electrically conductive. A material other than metal can be applied as a material of the core body 16.

The resin inner layer material 17 covers an outer surface of the core body 16 over the entire circumference of the ring shape of the core body 16 and over the entire circumference of the circular sectional shape of the core body 16. In the present embodiment, an axially perpendicular section of the resin inner layer material 17 is formed in a circular shape. The resin inner layer material 17 is arranged slightly eccentrically on a radially outer peripheral side of the ring part 12. If the core body 16 has an axially perpendicular section of a U-shape, the resin inner layer material 17 is filled in, in addition to a radially outside of the axially perpendicular section of the core body 16, a U-shaped recess of the core body 16. The resin inner layer material 17 is molded by injection molding on the outer surface side of the core body 16, and is directly joined to the outer surface of the core body 16. The axially perpendicular sectional shape of the resin inner layer material 17 is not limited to a circular shape, and may be any shape such as an egg shape, an elliptical shape, and a polygonal shape. The resin inner layer material 17 is molded from, for example, foamed resin. The resin inner layer material 17 uses, for example, foamed urethane resin. The resin inner layer material 17 may also use non-foamed resin.

The elastomer sheet 21 is wound around an outer surface of the resin inner layer material 17. The elastomer sheet 21 constitutes an electrostatic sensor 20. The elastomer sheet 21 will be detailed later.

The skin material 18 covers an outer surface (surface of the elastomer sheet 21 opposite to the core body 16) of the elastomer sheet 21 over the entire circumference (entire circumference in a circumferential direction in FIG. 1) of the ring shape of the elastomer sheet 21 and over the entire circumference (entire circumference in the circumferential direction in FIG. 2) of the axially perpendicular sectional shape of the elastomer sheet 21. That is, if a first electrode layer 25a is exposed on a first surface side of an elastomer layer 24, the skin material 18 also functions as a covering material for the first electrode layer 25a. The skin material 18 is wound and molded by injection molding on the outer surface side of the elastomer sheet 21, and is joined to the outer surface of the elastomer sheet 21. The skin material 18 is molded from, for example, urethane resin. An outer surface of the skin material 18 constitutes a design surface. Accordingly, the skin material 18 preferably uses non-foamed urethane resin or slightly foamed urethane resin.

### 3. Overall Configuration of Electrostatic Sensor 20

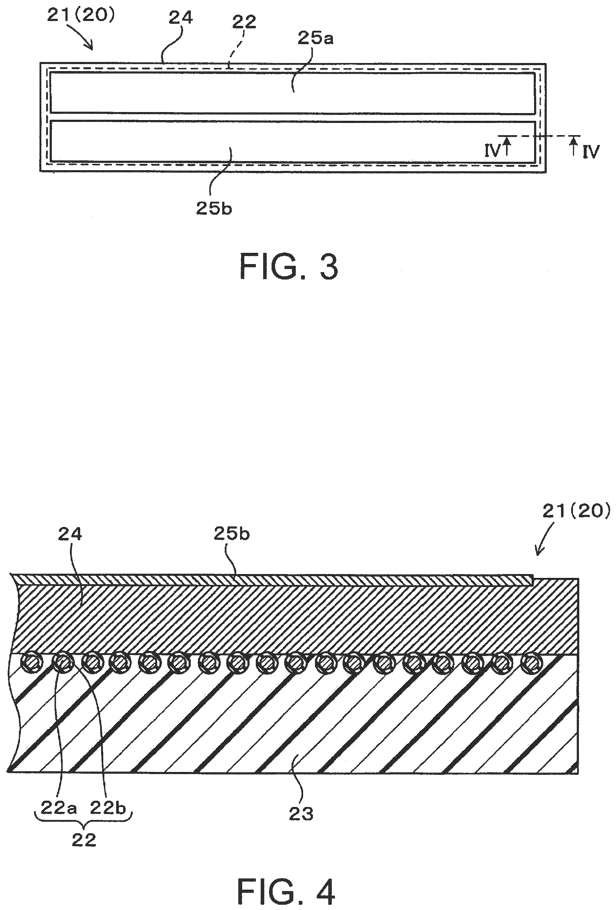

An overall configuration of the electrostatic sensor 20 of Embodiment 1 is described with reference to FIG. 3 and FIG. 4. In FIG. 4, thickness is exaggeratedly illustrated to facilitate the description. Although not pointed out in detail, thickness is exaggeratedly illustrated in other drawings as well. The electrostatic sensor 20 includes at least the elastomer sheet 21, a heater-cum-shield wire 22, and an insulator sheet 23 (example of base material sheet). The elastomer sheet 21 includes the elastomer layer 24, the first electrode layer 25a, and a second electrode layer 25b. However, if the elastomer sheet 21 does not have the function of the electrostatic sensor 20, the first electrode layer 25a and the second electrode layer 25b may be omitted.

As shown in FIG. 3, the elastomer sheet 21 is formed in a long planar shape. However, since the elastomer sheet 21 has flexibility and is configured to be expandable and contractible, the elastomer sheet 21 can be of any shape. That is, the elastomer sheet 21 shown in FIG. 3 shows an initial shape before deformation.

The first electrode layer 25a and the second electrode layer 25b are formed in the shape of an electrically conductive flexible sheet. The first electrode layer 25a corresponds to a first electrode sheet, and the second electrode layer 25b corresponds to a second electrode sheet. However, the first electrode layer 25a and the second electrode layer 25b may not be of a sheet shape. The entire elastomer sheet 21 may be formed in a sheet shape by forming a plurality of conductive members such as electric wires integrally with the elastomer layer 24.

The elastomer layer 24 is formed containing, for example, an elastomer, as a main component. Accordingly, the elastomer layer 24 is flexible. That is, the elastomer layer 24 has flexibility and is configured to be extendable in the plane direction. The elastomer layer 24 is formed containing, for example, a thermoplastic material (particularly a thermoplastic elastomer), as a main component. The elastomer layer 24 may be formed of the thermoplastic elastomer itself, or may be formed having, as a main component, an elastomer crosslinked by heating the thermoplastic elastomer as a raw material.

The elastomer layer 24 may contain rubber and resin other than thermoplastic elastomers, or any other material. For example, if the elastomer layer 24 includes rubber such as ethylenepropylene rubber (EPM, EPDM), the flexibility of the elastomer layer 24 is improved. From the viewpoint of improving the flexibility of the elastomer layer 24, the elastomer layer 24 may contain a flexibility imparting component such as a plasticizer. Furthermore, the elastomer layer 24 may be configured to have a reaction curable elastomer or a thermosetting elastomer as a main component.

Furthermore, the elastomer layer 24 preferably includes a material having good thermal conductivity. Accordingly, the elastomer layer 24 may use a thermoplastic elastomer having high thermal conductivity, or may contain a filler capable of increasing thermal conductivity.

The first electrode layer 25a and the second electrode layer 25b are arranged in the plane direction of the elastomer layer 24 on the first surface of the elastomer layer 24, that is, a front surface (upper surface in FIG. 4) side of the elastomer layer 24. The first electrode layer 25a and the second electrode layer 25b constitute a detection electrode. The first electrode layer 25a and the second electrode layer 25b are electrically conductive. Furthermore, the first electrode layer 25a and the second electrode layer 25b are flexible. That is, the first electrode layer 25a and the second electrode layer 25b have flexibility and are configured to be extendable in the plane direction. The first electrode layer 25a and the second electrode layer 25b are made of, for example, conductive cloth, conductive elastomer, or metal foil.

FIG. 4 illustrates a case where the first electrode layer 25a and the second electrode layer 25b are conductive cloth. The case where the first electrode layer 25a and the second electrode layer 25b are made of conductive cloth is described in detail. The conductive cloth is a woven fabric or a nonwoven fabric made of conductive fibers. Here, the conductive fibers are formed by covering a surface of flexible fibers with an electrically conductive material. The conductive fibers are formed, for example, by plating a surface of resin fibers such as polyethylene fibers with copper, nickel or the like.

In this case, the first electrode layer 25a and the second electrode layer 25b are joined to the elastomer layer 24 by fusion (thermal fusion) of the elastomer layer 24 itself. Furthermore, since the first electrode layer 25a and the second electrode layer 25b are cloth, they have a plurality of through holes. Accordingly, a portion of the elastomer layer 24 enters the through holes of the first electrode layer 25a and the second electrode layer 25b. That is, at least a portion of the first electrode layer 25a and the second electrode layer 25b is embedded in the elastomer layer 24.

A case where the first electrode layer 25a and the second electrode layer 25b are made of a conductive elastomer is described in detail. In this case, the first electrode layer 25a and the second electrode layer 25b are formed by using an elastomer as a base material and containing a conductive filler. The elastomer which is the base material of the first electrode layer 25a and the second electrode layer 25b preferably has the same kind of main component as the elastomer layer 24. Particularly, the first electrode layer 25a and the second electrode layer 25b are preferably made of a thermoplastic elastomer.

However, the first electrode layer 25a and the second electrode layer 25b are made of a material having a softening point higher than that of the elastomer layer 24. The reason is that, when the first electrode layer 25a and the second electrode layer 25b are joined to the elastomer layer 24 by fusion (thermal fusion) of the elastomer layer 24 itself, the elastomer layer 24 is to be softened before the first electrode layer 25a and the second electrode layer 25b. As a result, a thickness of the elastomer layer 24 can be set to a desired thickness.

Here, the first electrode layer 25a and the second electrode layer 25b are joined to the elastomer layer 24 by fusion (thermal fusion) of the elastomer layer 24 itself. Furthermore, if the first electrode layer 25a and the second electrode layer 25b are formed so that the elastomer is located in a surface layer, the first electrode layer 25a and the second electrode layer 25b are joined with the elastomer layer 24 by fusion (thermal fusion) of the first electrode layer 25a and the second electrode layer 25b themselves. That is, the first electrode layer 25a and the second electrode layer 25b are joined with the elastomer layer 24 by mutual fusion. The first electrode layer 25a and the second electrode layer 25b may be joined with the elastomer layer 24 by fusion of only one of them.

A case where the first electrode layer 25a and the second electrode layer 25b are made of metal foil is described in detail. Like the conductive cloth, the metal foil preferably has a plurality of through holes. Accordingly, the first electrode layer 25a and the second electrode layer 25b have flexibility and are able to extend in the plane direction as the through holes deform. It is sufficient if the metal foil is a conductive metal material. For example, copper foil or aluminum foil can be applied. Furthermore, as in the case of conductive cloth, the first electrode layer 25a and the second electrode layer 25b are joined to the elastomer sheet 21 by fusion (thermal fusion) of the elastomer layer 24 itself.

One heater-cum-shield wire 22 is arranged on a second surface of the elastomer layer 24, that is, a back surface (lower surface in FIG. 4) side of the elastomer layer 24. In FIG. 3, the heater-cum-shield wire 22 is illustrated in a planar shape for convenience, and the heater-cum-shield wire 22 is wired within a region illustrated in a planar shape. The heater-cum-shield wire 22 is configured to serve both as a heater wire and a shield electrode wire. The heater-cum-shield wire 22 is formed to have thermal resistance in order to function as the heater wire. Furthermore, the heater-cum-shield wire 22 is configured to function as a shield electrode by applying a predetermined voltage.

As shown in FIG. 4, the heater-cum-shield wire 22 is configured to include, for example, a conductive wire 22a, and a conductive wire covering material 22b that covers the conductive wire 22a. In order to have thermal resistance, the conductive wire 22a includes, for example, a core wire, and a peripheral line spirally wound around the core wire. However, the conductive wire 22a is not limited to said configuration. It is sufficient if the conductive wire 22a is electrically conductive and has thermal resistance.

Furthermore, the heater-cum-shield wire 22 is flexible. That is, the heater-cum-shield wire 22 has flexibility and is configured to be extendable in the plane direction. The heater-cum-shield wire 22 is made of, for example, conductive cloth, conductive elastomer, or metal foil.

In the present embodiment, a portion of the heater-cum-shield wire 22 is arranged in contact with the elastomer layer 24. A portion of the heater-cum-shield wire 22 may be embedded in the elastomer layer 24. Accordingly, the heater-cum-shield wire 22 is able to directly transfer heat to the elastomer layer 24.

Particularly, the conductive wire covering material 22b of the heater-cum-shield wire 22 is joined to the elastomer layer 24 by fusion (thermal fusion) of the elastomer layer 24 itself. Furthermore, if the conductive wire covering material 22b of the heater-cum-shield wire 22 is formed containing a thermoplastic elastomer, the heater-cum-shield wire 22 and the elastomer layer 24 are joined by fusion (thermal fusion) of the conductive wire covering material 22b itself of the heater-cum-shield wire 22. That is, the heater-cum-shield wire 22 and the elastomer layer 24 are joined by mutual fusion. The heater-cum-shield wire 22 and the elastomer layer 24 may be joined by fusion of only one of them.

The heater-cum-shield wire 22 is arranged to face substantially the entire surface of the first electrode layer 25a and the second electrode layer 25b.

The insulator sheet 23 is arranged on the second surface of the elastomer layer 24, that is, the back surface (lower surface in FIG. 4) side of the elastomer layer 24. Furthermore, the insulator sheet 23 is arranged on a side opposite to the first electrode layer 25a and the second electrode layer 25b with respect to the heater-cum-shield wire 22. That is, the insulator sheet 23 and the elastomer layer 24 sandwich the heater-cum-shield wire 22 therebetween. In the present embodiment, the insulator sheet 23 is formed in the same planar shape as the elastomer layer 24, and faces the elastomer layer 24 over the entire surface. However, the insulator sheet 23 may be of a different planar shape from the elastomer layer 24.

The insulator sheet 23 is formed containing, for example, an elastomer, as a main component. Accordingly, the insulator sheet 23 is flexible. That is, the insulator sheet 23 has flexibility and is configured to be extendable in the plane direction. The insulator sheet 23 is formed containing, for example, a thermoplastic material (particularly a thermoplastic elastomer), as a main component. The insulator sheet 23 may be formed of the thermoplastic elastomer itself, or may be formed having, as a main component, an elastomer crosslinked by heating the thermoplastic elastomer as a raw material.

The insulator sheet 23 may contain rubber and resin other than thermoplastic elastomers, or any other material. For example, if the insulator sheet 23 includes rubber such as ethylenepropylene rubber (EPM, EPDM), the flexibility of the insulator sheet 23 is improved. From the viewpoint of improving the flexibility of the insulator sheet 23, the insulator sheet 23 may contain a flexibility imparting component such as a plasticizer.

The insulator sheet 23 is joined to the second surface of the elastomer layer 24 by fusion of the elastomer layer 24 itself. If the insulator sheet 23 is formed containing a thermoplastic elastomer, the elastomer layer 24 and the insulator sheet 23 are joined by fusion of the insulator sheet 23 itself.

Furthermore, the insulator sheet 23 is arranged in contact with a portion of the heater-cum-shield wire 22. Particularly, a portion of the heater-cum-shield wire 22 is embedded in the insulator sheet 23. The insulator sheet 23 is joined to the conductive wire covering material 22b of the heater-cum-shield wire 22 by fusion of the insulator sheet 23 itself.

In FIG. 4, the heater-cum-shield wire 22 is set to be embedded deeper in the insulator sheet 23 than in the elastomer layer 24. However, the heater-cum-shield wire 22 may be embedded to about the same depth in the insulator sheet 23 and the elastomer layer 24, or may be embedded deeper in the elastomer layer 24.

If the conductive wire covering material 22b of the heater-cum-shield wire 22 is formed containing a thermoplastic elastomer, the heater-cum-shield wire 22 and the insulator sheet 23 are joined by fusion (thermal fusion) of the conductive wire covering material 22b itself of the heater-cum-shield wire 22. That is, the heater-cum-shield wire 22 and the insulator sheet 23 are joined by mutual fusion. The heater-cum-shield wire 22 and the insulator sheet 23 may be joined by fusion of only one of them.

Furthermore, the insulator sheet 23 preferably includes a material having high thermal insulation properties. That is, the insulator sheet 23 is formed to have lower thermal conductivity than the elastomer layer 24. Particularly, the insulator sheet 23 is preferably formed containing foamed resin as a material having lower thermal conductivity than the elastomer layer 24. High thermal insulation performance can be exhibited by an air layer of the foamed resin.

In the case where the insulator sheet 23 is made of foamed resin, a surface on the elastomer layer 24 side is preferably formed in an open-cell state in which cells of the foamed resin are opened. In this case, the insulator sheet 23 is joined to the elastomer layer 24 by partial impregnation of the elastomer layer 24. Accordingly, a joining force between the elastomer layer 24 and the insulator sheet 23 is increased. Furthermore, the insulator sheet 23 may be joined to the heater-cum-shield wire 22 by partial impregnation of the conductive wire covering material 22b of the heater-cum-shield wire 22.

### 4. Shape of Elastomer Sheet 21

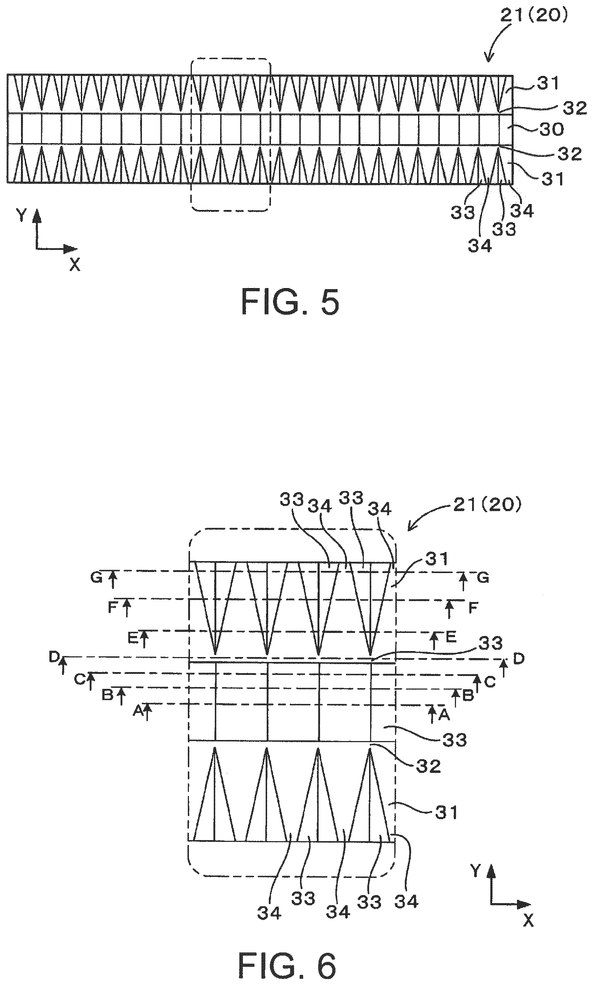

A shape of the elastomer sheet 21 is described with reference to FIG. 5 to FIG. 8. In FIG. 5, for convenience of description, the first electrode layer 25a, the second electrode layer 25b, the heater-cum-shield wire 22 and the insulator sheet 23 are omitted. FIG. 5 shows the elastomer sheet 21 in a state before being wound around the steering 10.

The elastomer sheet 21 is configured in a substantially rectangular shape long in a longitudinal direction. In the following description, of two directions orthogonal to a longitudinal direction X of the elastomer sheet 21, the direction orthogonal to a front surface of the elastomer sheet 21 is defined as a thickness direction Z, and the direction along the front surface of the elastomer sheet 21 is defined as a winding direction Y in which the elastomer sheet 21 is wound around the ring part 12 of the steering 10. The elastomer sheet 21 may include a projecting piece projecting outward from a side edge. A terminal for connecting the first electrode layer 25a, the second electrode layer 25b or the heater-cum-shield wire 22 with an external circuit can be attached to the projecting piece.

The elastomer sheet 21 is wound around the ring part 12 of the steering 10 along the winding direction Y. The longitudinal direction X of the elastomer sheet 21 is a cross direction crossing the winding direction Y. The elastomer sheet 21 includes, with respect to the winding direction Y, a central region 30 near a central position, an end region 31 close to a pair of edges in the winding direction Y, and a boundary region 32 located between the central region 30 and the end region 31.

The central region 30 and a pair of end regions 31 are formed in a wave-like shape extendable or compressible in the longitudinal direction X over the entire longitudinal direction X. The wave-like shape formed in the central region 30 and the pair of end regions 31 is formed by heating and softening the elastomer sheet 21 and then subjecting it to press working.

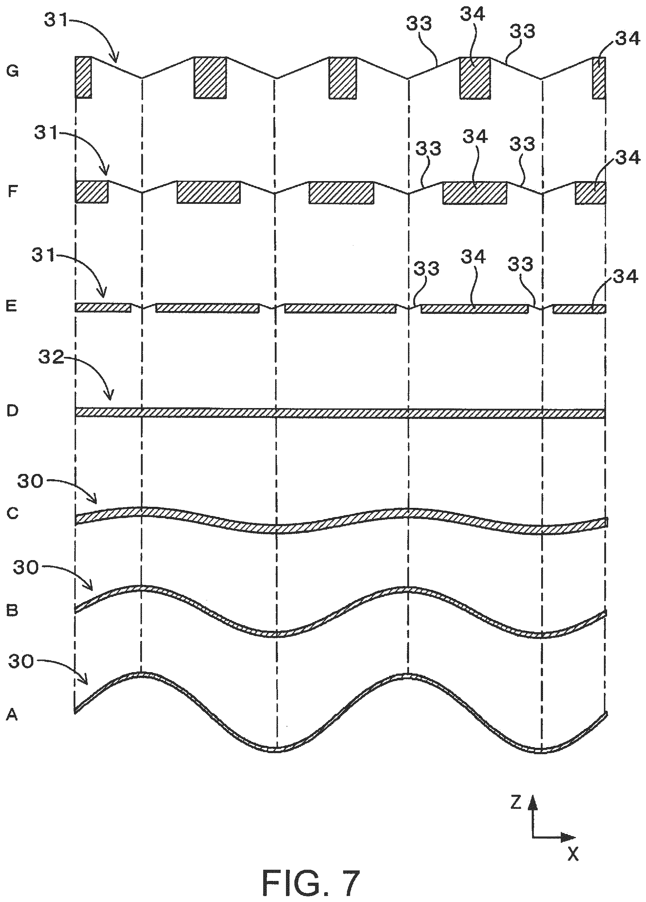

FIG. 7 shows sectional views taken along line A-A, line B-B, line C-C, line D-D, line E-E, line F-F, and line G-G in FIG. 6. The reference numerals A to G match the reference numerals of sections in the sectional views.

As shown in the sectional views of FIG. 7 taken along line A-A, line B-B, and line C-C, in the present embodiment, with respect to the winding direction Y, the central region 30 of the elastomer sheet 21 is formed in a wave-like shape extendable or compressible in the longitudinal direction X over the entire elastomer sheet 21 in the longitudinal direction X. The wave-like shape formed in the central region 30 is constituted by a smooth curved surface. The central region 30 is formed in which a sectional shape taken along the longitudinal direction X in a state before being wound around the steering 10 is a sine wave-like shape. The sine wave-like shape includes a case where the sectional shape of the central region 30 matches a sine wave, and also includes a case where the sectional shape of the central region 30 is different from a sine wave but can be recognized as a sine wave.

As shown in the sectional views of FIG. 7 taken along line A-A, line B-B, and line C-C, an amplitude of the wave-like shape formed in the central region 30 of the elastomer sheet 21 is largest at the central position of the central region 30 in the winding direction Y, and decreases as approaching the pair of end regions 31. That is, the amplitude of the wave-like shape decreases in the order of reference numerals A, B, and C. In the present embodiment, the amplitude of the wave-like shape continuously changes as approaching the pair of end regions 31 from the central position in the winding direction Y. However, the amplitude of the wave-like shape may decrease in stages as approaching the pair of end regions 31 from the central position in the winding direction Y. This case is effective when a curvature of the three-dimensional curved surface of the steering 10 changes in stages.

A thickness dimension of the elastomer sheet 21 at the central region 30 is smallest at the central position in the winding direction Y, and is continuously reduced toward the pair of end regions 31. This is due to that the elastomer sheet 21 is extended by press working. Since the elastomer sheet 21 is extended the most at the central position in the winding direction Y, the thickness dimension of the elastomer sheet 21 is smallest.

A wavelength of the wave-like shape in the central region 30 is the same at the central position in the winding direction Y and at a position close to the pair of end regions 31.

The sectional view marked with reference numerical D in FIG. 7 is a sectional view taken along line D-D in FIG. 6. The sectional view taken along line D-D is a sectional view of the boundary region 32 located between the central region 30 and the end region 31 of the elastomer sheet 21. The boundary region 32 is of a flat plate shape. A thickness dimension of the boundary region 32 may be uniform or nonuniform with respect to the longitudinal direction X and the winding direction Y. When the elastomer sheet 21 is heated, the shape may be fixed while the central region 30 is bent.

As shown in the sectional views of FIG. 7 taken along line E-E, line F-F, and line G-G, formed in the pair of end regions 31 are a plurality of bellows parts 33 arranged at predetermined intervals in the longitudinal direction X, and a support 34 that connects the bellows parts 33 adjacent to each other in the longitudinal direction X. The bellows part 33 is formed in an M-shape when viewed in the winding direction Y, and is formed in a shape in which one plane is bent. The M-shape is an example of the wave-like shape.

By deforming the planes constituting the bellows parts 33 so that they approach each other, the bellows parts 33 are compressed with respect to the longitudinal direction X. By deforming the planes constituting the bellows parts 33 so that they are separated, the bellows parts 33 are extended with respect to the longitudinal direction.

A length dimension of the bellows part 33 with respect to the longitudinal direction X continuously increases as approaching an end of the elastomer sheet 21 from the central region 30. However, the length dimension of the bellows part 33 with respect to the longitudinal direction X may increase in stages as approaching the end of the elastomer sheet 21 from the central region 30. This case is effective when the three-dimensional curved surface of the steering 10 changes in stages. The length dimension of the bellows part 33 with respect to the longitudinal direction X decreases as a rate of extension or compression in the longitudinal direction X decreases, and increases as the rate of extension or compression increases.

With respect to the thickness direction Z, a thickness dimension of the support 34 is larger than a thickness dimension of the bellows part 33. When the elastomer sheet 21 is subjected to press working, since resin moves from the bellows part 33 to the support 34, the larger the length dimension of the bellows part 33 with respect to the longitudinal direction X, the larger the thickness dimension of the support 34. A length dimension of the support 34 with respect to the longitudinal direction X increases as the rate of extension or compression in the longitudinal direction X decreases, and decreases as the rate of extension or compression increases.

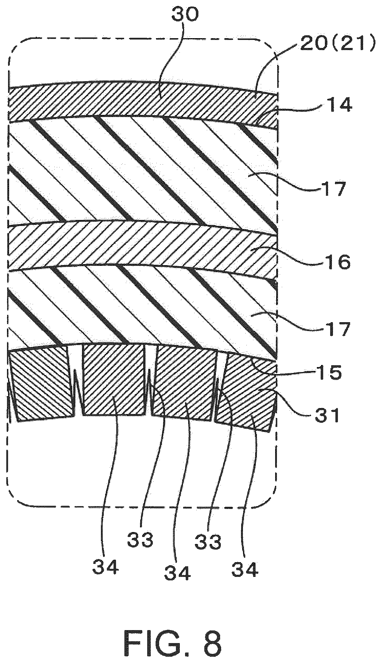

FIG. 8 shows a partially enlarged sectional view of a state in which the elastomer sheet 21 is wound around the steering 10. For convenience of description, the skin material 18 is omitted. On an upper side of FIG. 8 is the outer peripheral surface 14 of the resin inner layer material 17 constituting the ring part 12 of the steering 10. On a lower side of FIG. 8 is the inner peripheral surface 15 of the resin inner layer material 17 constituting the ring part 12.

The central region 30 of the elastomer sheet 21 is attached to the outer peripheral surface 14 of the resin inner layer material 17 constituting the ring part 12. The wave-like shape of the central region 30 is extended in the longitudinal direction X, thereby being deformed into a smooth curved shape along the outer peripheral surface 14 of the resin inner layer material 17 constituting the ring part 12. Accordingly, nonuniform formation of large wrinkles in the central region 30 of the elastomer sheet 21 can be suppressed.

The pair of end regions 31 of the elastomer sheet 21 are attached to the inner peripheral surface 15 of the resin inner layer material 17 constituting the ring part 12. The plurality of bellows parts 33 of the pair of end regions 31 approach each other, thereby compressing the pair of end regions 31 of the elastomer sheet 21 in the longitudinal direction X. Since the bellows part 33 is deformed, the supports 34 adjacent to each other in the longitudinal direction X approach each other. Accordingly, a relatively narrow gap is formed between the adjacent supports 34, and the deformed bellows part 33 may be accommodated in this gap. A dimension across the gap formed between the supports 34 is relatively small. Since the gaps are regularly arranged and formed between adjacent supports 34, they are uniformly arranged. Hence, nonuniform formation of large wrinkles in the pair of end regions 31 of the elastomer sheet 21 can be suppressed.

In the present embodiment, when being wound around the resin inner layer material 17, the central region 30 of the elastomer sheet 21 is extended by about 10% compared to a state before being wound around the resin inner layer material 17. On the other hand, when being wound around the resin inner layer material 17, the pair of end regions 31 of the elastomer sheet 21 are compressed by about 10% compared to before being wound around the resin inner layer material 17. Accordingly, in the elastomer sheet 21, a difference between a peripheral length of the outer peripheral surface 14 and a peripheral length of the inner peripheral surface 15 of the resin inner layer material 17 constituting the ring part 12 can be coped with. However, rates at which the elastomer sheet 21 is extended and compressed are not particularly limited.

FIG. 2 shows a section of the ring part 12 in an axially perpendicular direction. As described above, the thickness dimension of the central region 30 of the elastomer sheet 21 is relatively small, and the thickness dimension of the support 34 formed in the pair of end regions 31 of the elastomer sheet 21 is relatively large. Accordingly, the thickness dimension of the elastomer sheet 21 in the state of being wound around the resin inner layer material 17 differs between the outer peripheral surface 14 of the resin inner layer material 17 constituting the ring part 12 and the inner peripheral surface 15 of the resin inner layer material 17 constituting the ring part 12. As described above, since the resin inner layer material 17 is arranged slightly eccentrically on the outer peripheral side of the ring part 12, in the state in which the elastomer sheet 21 is wound around the resin inner layer material 17, an outer shape of the elastomer sheet 21 in the axially perpendicular direction is configured to be circular.

### 5. Manufacturing for Manufacturing Steering 10

Subsequently, an example of a method for manufacturing the steering 10 is described. The method for manufacturing the steering 10 is not limited to the following description.

The resin inner layer material 17 is injection molded on the outer surface of the core body 16. That is, the resin inner layer material 17 is molded by arranging the core body 16 in an injection mold (not illustrated) and injecting a molding material into the mold. In this way, the core body 16 and the resin inner layer material 17 are integrated with each other.

The elastomer layer 24, the first electrode layer 25a, the second electrode layer 25b, the heater-cum-shield wire 22, and the insulator sheet 23 are formed in a predetermined shape. The first electrode layer 25a and the second electrode layer 25b are joined to the front surface of the elastomer layer 24. Accordingly, the elastomer sheet 21 is formed. The heater-cum-shield wire 22 and the insulator sheet 23 are joined. The insulator sheet 23 and the heater-cum-shield wire 22 are joined to the back surface of the elastomer sheet 21 so that the heater-cum-shield wire 22 faces the back surface of the elastomer sheet 21. By integrating the elastomer sheet 21, the heater-cum-shield wire 22, and the insulator sheet 23 with each other, the electrostatic sensor 20 is formed.

The electrostatic sensor 20 is heated to a temperature equal to or higher than the softening point of the elastomer layer 24 and the insulator sheet 23. After that, the electrostatic sensor 20 is pressurized by a known rolling mill (not illustrated) to form a wave-like shape in the central region 30 and the pair of end regions 31 of the electrostatic sensor 20. The rolling mill includes a pair of rollers. By passing the electrostatic sensor 20 between the pair of rollers, it is possible to transfer a shape formed on a surface of the rollers to the electrostatic sensor 20. That is, a shape corresponding to a sine wave-like shape may be formed in advance on the surface of the roller corresponding to the central region 30 of the elastomer sheet 21, and a shape corresponding to the M-shape may be formed in advance on the surface of the roller corresponding to the pair of end regions 31 of the elastomer sheet 21.

Subsequently, the electrostatic sensor 20 is wound around the core body 16 and the resin inner layer material 17. First, the electrostatic sensor 20 is arranged so as to face the resin inner layer material 17. Next, attachment is performed so that the central region 30 of the elastomer sheet 21 is located on the outer peripheral surface 14 of the ring part 12. After that, the electrostatic sensor 20 is wound around the ring part 12 along a peripheral surface of the ring part 12 with respect to the axially perpendicular direction. At this time, the central region 30 of the elastomer sheet 21 is extended in the longitudinal direction X, and the pair of end regions 31 are compressed in the longitudinal direction X. The pair of end regions 31 are bonded or thermally fused while in contact with each other.

After the electrostatic sensor 20 is wound around the core body 16 and the resin inner layer material 17 over the entire circumference, the resin inner layer material 17 and the electrostatic sensor 20 are bonded or thermally fused.

Subsequently, the skin material 18 is formed into a predetermined shape and wound around an outer surface of the electrostatic sensor 20. After that, the electrostatic sensor 20 and the skin material 18 are bonded or thermally fused. The skin material 18 may be formed by arranging the core body 16, the resin inner layer material 17, and the electrostatic sensor 20 in an injection mold (not illustrated), and injecting a molding material therein.

### 6. Effects of Embodiment 1

Subsequently, effects of Embodiment 1 are described. The elastomer sheet 21 of the present embodiment is the elastomer sheet 21 that is made of an elastomer and is wound around the steering 10 having a three-dimensional curved surface. The elastomer sheet 21 includes: the central region 30, located in the center of the elastomer sheet 21 in the winding direction Y; and the pair of end regions 31, located at the end of the elastomer sheet 21 in the winding direction Y. The central region 30 and the pair of end regions 31 are formed in which the sectional shape of the elastomer sheet 21 taken along the longitudinal direction X crossing the winding direction Y is a wave-like shape extendable or compressible in the longitudinal direction X. The wave-like shape is configured so that a rate of extension or compression of the central region 30 and a rate of extension or compression of the pair of end regions 31 differ from each other with respect to the longitudinal direction X.

A wave-like shape is formed in the elastomer sheet 21. By deformation so as to increase the wavelength of the wave-like shape, the elastomer sheet 21 can be easily extended compared to the case of extending the elastomer sheet 21 itself. Similarly, by deformation so as to reduce the wavelength of the wave-like shape, the elastomer sheet 21 can be easily compressed compared to the case of compressing the elastomer sheet 21 itself. The above wave-like shape is configured so that the rate of extension or compression of the central region 30 the elastomer sheet 21 and the rate of extension or compression of the pair of end regions 31 differ from each other. Accordingly, by simple work of widening or narrowing the wave-like shape that is formed in advance, the extension rate or compression rate of the central region 30 and the pair of end regions 31 in the elastomer sheet 21 can be changed. As a result, the efficiency of the work of winding the elastomer sheet 21 can be improved.

In the present embodiment, one of the central region 30 and the pair of end regions 31 is configured to be extendable, and the other is configured to be compressible.

By configuring one of the central region 30 and the pair of end regions 31 of the elastomer sheet 21 to be extendable and the other to be compressible, for example, by performing extension work on the central region 30 and performing compression work on the pair of end regions 31, the elastomer sheet 21 can be wound around a winding target. Accordingly, when the elastomer sheet 21 is wound around the ring part 12, since work content can be clearly distinguished between the central region 30 and the pair of end regions 31, the efficiency of the winding work can be improved.

The elastomer sheet 21 of the present embodiment further includes the boundary region 32. The boundary region 32 is located at a boundary between the central region 30 and the pair of end regions 31 in the winding direction Y of the elastomer sheet 21, and is formed in which the sectional shape taken along the longitudinal direction X is a flat plate shape in the state before being wound around the ring part 12 of the steering 10.

In the case where one of the central region 30 and the pair of end regions 31 is extendable and the other is compressible, a portion less likely to deform is formed between the central region 30 and the pair of end regions 31. Since this portion becomes a skeleton structure, the strength of the elastomer sheet 21 can be improved.

In the present embodiment, at least one of the central region 30 and the pair of end regions 31 is formed in which the sectional shape taken along the longitudinal direction X is a wave-like shape over the entire length in the longitudinal direction X. Accordingly, an extendable or compressible configuration can be easily formed over the entire length in the longitudinal direction X.

In the present embodiment, at least one of the central region 30 and the pair of end regions 31 is formed in which the sectional shape taken along the longitudinal direction X is a sine wave-like shape in the state before being wound around the ring part 12.

When the elastomer sheet 21 is deformed so as to increase the wavelength of the sine wave-like shape, the elastomer sheet 21 is deformed so as to approximate a flat surface. In this way, it is particularly effective to apply the sine wave-like shape to a region where the elastomer sheet 21 is extendable. On the other hand, in the case where deformation is performed in a direction of reducing the wavelength of the sine wave-like shape, vertices of sine waves approach each other. Since a gap is formed between the vertices of adjacent sine waves, this portion is not completely flat. However, since the sine waves have a regular shape, an overall flat shape is achieved compared to a case where irregular wrinkles are formed. Hence, the sine wave-like shape can be applied to a region where the elastomer sheet 21 is compressible.

In the present embodiment, an amplitude of the sine wave-like shape decreases as the rate of extension or compression in the longitudinal direction X decreases, and increases as the rate of extension or compression in the longitudinal direction X increases. By a simple method of adjusting a magnitude of the amplitude of the sine wave-like shape, the rate of extension or compression can be easily coped with in the elastomer sheet 21.

In the present embodiment, the amplitude of the sine wave-like shape continuously decreases as approaching the pair of end regions 31 from the central region 30. This is effective when the curvature of the three-dimensional curved surface formed in the ring part 12 continuously changes.

In the present embodiment, at least one of the central region 30 and the pair of end regions 31 includes: a plurality of bellows parts 33, formed in which the sectional shape taken along the longitudinal direction X is extendable or compressible in the longitudinal direction X, and arranged at predetermined intervals in the longitudinal direction X; and the support 34, connecting the bellows parts 33 adjacent to each other in the longitudinal direction X, and formed thicker than the bellows part 33 in a direction orthogonal to the winding direction Y and the longitudinal direction X.

When the bellows part 33 formed in the pair of end regions 31 is compressed, a plurality of supports 34 approach each other. Then, end faces of the plurality of supports 34 constitute a plane as a whole. On the other hand, the compressed bellows part 33 is accommodated in a narrow space between the plurality of supports 34. Hence, the elastomer sheet 21 is of a planar shape as a whole. In this way, it is particularly effective to apply the present embodiment to the region where the elastomer sheet 21 is compressible.

In the present embodiment, a width dimension of the bellows part 33 with respect to the longitudinal direction X decreases as the rate of extension or compression in the longitudinal direction X decreases, and increases as the rate of extension or compression in the longitudinal direction X increases. A width dimension of the support 34 with respect to the longitudinal direction X increases as the rate of extension or compression in the longitudinal direction X decreases, and decreases as the rate of extension or compression increases.

By adjusting the width dimension of the bellows part 33 and the width dimension of the support 34 with respect to the longitudinal direction X, the rate of extension or compression can be easily coped with in the elastomer sheet 21.

In the present embodiment, the width dimension of the bellows part 33 with respect to the longitudinal direction X continuously increases as approaching ends of the pair of end regions, and the width dimension of the support 34 with respect to the longitudinal direction X continuously decreases as approaching the ends of the pair of end regions.

This is effective when a curvature of a convex curved surface formed in the ring part 12 continuously changes.

In the present embodiment, the ring part 12 is a shaft member whose central axis is a convex curve. The central region 30 is located on the surface on the side far from the center of curvature of the convex curve in the shaft member in the circumferential direction, and is formed to be extendable in the longitudinal direction X. The pair of end regions 31 are located on the surface on the side close to the center of curvature of the convex curve in the shaft member in the circumferential direction, and are formed to be compressible in the longitudinal direction X.

In the case where the ring part 12 is a shaft member whose central axis is a convex curve, in the ring part 12 in the circumferential direction, a peripheral length of the surface on the side far from the center of curvature of the convex curve may be larger than a peripheral length of the surface on the side close to the center of curvature of the convex curve. Hence, a difference in peripheral length occurs between the side far from the center of curvature of the convex curve and the side close to the center of curvature of the convex curve. In the present embodiment, the central region 30 of the elastomer sheet 21 is attached to the side far from the center of curvature of the convex curve in the ring part 12, and the elastomer sheet 21 is wound toward the side close to the center of curvature of the convex curve in the ring part 12. Then, since the pair of end regions 31 of the elastomer sheet 21 is compressible, the difference in peripheral length between the side far from the center of curvature of the convex curve and the side close to the center of curvature of the convex curve in the ring part 12 can be absorbed.

In the present embodiment, the winding target member is the steering 10 of an annular shape. The central region 30 is located on a surface on an outer peripheral side of the annular shape of the steering 10, and is formed to be extendable in the longitudinal direction X. The pair of end regions 31 are located on a surface on an inner peripheral side of the annular shape of the steering 10, and are formed to be compressible in the longitudinal direction X.

In the case where the winding target member is of an annular shape, since the peripheral length on the outer peripheral side may be larger than the peripheral length on the inner peripheral side, a difference occurs in peripheral length between the inner peripheral side and the outer peripheral side. In the present embodiment, the central region 30 of the elastomer sheet 21 is attached to the outer peripheral side of the ring part 12, and the elastomer sheet 21 is wound toward the inner peripheral side of the ring part 12. Then, since the pair of end regions 31 of the elastomer sheet 21 is compressible, the difference in peripheral length between the outer peripheral side and the inner peripheral side of the ring part 12 can be absorbed.

In the present embodiment, the central region 30 is formed in which the sectional shape taken along the longitudinal direction X is a wave-like shape over the entire length in the longitudinal direction X. The pair of end regions 31 includes a plurality of bellows parts 33 and the support 34. The plurality of bellows parts 33 are formed in which the sectional shape taken along the longitudinal direction X is extendable or compressible in the longitudinal direction X, and the plurality of bellows parts 33 are arranged at predetermined intervals in the longitudinal direction X. The support 34 connects the bellows parts 33 adjacent to each other in the longitudinal direction X, and is formed thicker than the bellows part 33 in the direction orthogonal to the winding direction Y and the longitudinal direction X.

The present embodiment is particularly effective in the case where the central region 30 is set as an extendable region and the pair of end regions 31 are set as a compressible region in the elastomer sheet 21. The reason is described below.

First, when the elastomer sheet 21 is deformed so as to increase the wavelength of the wave-like shape, the elastomer sheet 21 is deformed into a smooth curved surface along the outer peripheral surface 14 of the steering 10. Hence, it is particularly effective to apply a wave-like shape to the extendable region in the elastomer sheet 21.

When the bellows part 33 is compressed, a plurality of supports 34 approach each other. Then, the end faces of the plurality of supports 34 constitute a plane as a whole. On the other hand, the compressed bellows part 33 is accommodated in a narrow space between the plurality of supports 34. Hence, the elastomer sheet 21 as a whole is of a smooth curved shape along the inner peripheral surface 15 of the steering 10. In this way, it is particularly effective to apply the present embodiment to the compressible region in the elastomer sheet 21.

In the present embodiment, the elastomer sheet 21 includes the elastomer layer 24 made of an elastomer, and the first electrode layer 25a and the second electrode layer 25b arranged on the first surface of the elastomer layer 24. Accordingly, an electric circuit can be formed on the first surface of the elastomer sheet 21.

In the present embodiment, the first electrode layer 25a and the second electrode layer 25b are arranged in parallel on the first surface of the elastomer layer 24. Accordingly, a plurality of electrode layers 25a and 25b can be arranged in parallel on the first surface of the elastomer layer 24.

The electrostatic sensor 20 of the present embodiment includes a heater sheet which is arranged on the second surface of the elastomer layer 24 opposite to the first surface and in which the heater-cum-shield wire 22 that serves both as a heater wire and a shield wire is integrated with the insulator sheet 23.

By passing a current through the heater-cum-shield wire 22, the elastomer sheet 21 can be heated. By the heater-cum-shield wire 22, electromagnetic shielding properties of the electrostatic sensor 20 are improved.

The electrostatic sensor 20 of the present embodiment includes the first electrode layer 25a of a sheet shape and the second electrode layer 25b of a sheet shape.

The efficiency of the work of winding the electrostatic sensor 20 around the winding target can be improved.

In the present embodiment, the electrostatic sensor 20 includes a heater sheet which is arranged on a second surface of the elastomer sheet 21 opposite to a first surface and in which the heater-cum-shield wire 22 that serves both as a heater wire and a shield wire is integrated with the insulator sheet 23.

By utilizing a change in capacitance between the first electrode layer 25a arranged on the first surface of the elastomer sheet 21 and the heater sheet arranged on the second surface of the elastomer sheet 21, the elastomer sheet 21 can be functioned as a sensor. Since the heater-cum-shield wire 22 and the base material sheet are integrated with each other, the electrostatic sensor 20 can be made thin.

### (Embodiment 2)

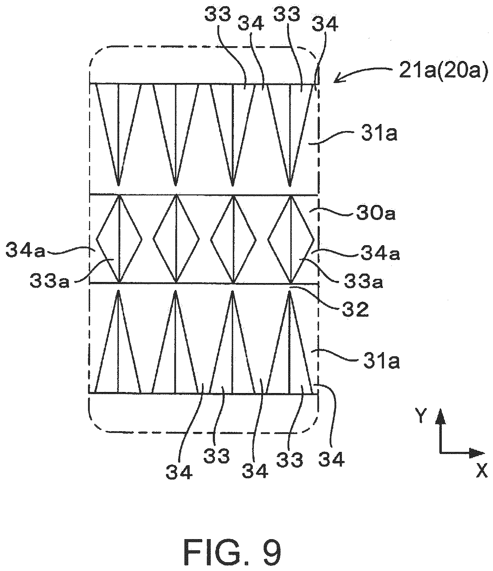

Subsequently, Embodiment 2 is described with reference to FIG. 9 to FIG. 10. As shown in FIG. 9, an elastomer sheet 21a according to an electrostatic sensor 20a of the present embodiment includes, in a central region 30a, a plurality of bellows parts 33a arranged at predetermined intervals in the longitudinal direction X, and a support 34a that connects the bellows parts 33a adjacent to each other in the longitudinal direction X. With respect to the thickness direction Z, the support 34a is formed thicker than the bellows part 33a. That is, with respect to the thickness direction Z, a thickness dimension of the support 34a is larger than a thickness dimension of the bellows part 33a.

As shown in FIG. 9, when viewed from a front surface side of the elastomer sheet 21a, a length dimension of the bellows part 33a formed in the central region 30a with respect to the longitudinal direction X is largest at the central position with respect to the winding direction Y, and decreases as approaching an end of the elastomer sheet 21a. Accordingly, an extension rate of the central region 30a of the elastomer sheet 21a is configured to become largest.

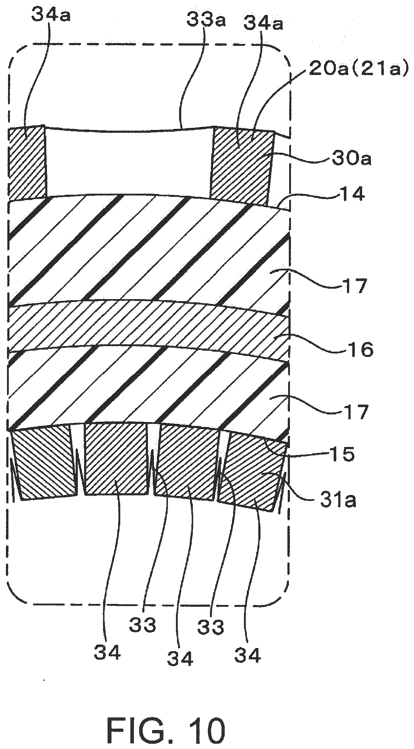

As shown in FIG. 10, in the present embodiment, in a state in which the elastomer sheet 21a is wound around the resin inner layer material 17 constituting the ring part 12, the bellows part 33a formed in the central region 30a of the elastomer sheet 21a may be attached to the outer peripheral surface 14 of the resin inner layer material 17 constituting the ring part 12. Planes constituting the bellows part 33a are extended so as to be separated from each other. A space is formed between the bellows part 33a and the outer peripheral surface 14 of the resin inner layer material 17 constituting the ring part 12. Since the bellows part 33a is supported by the support 34a, deformation of the elastomer sheet 21a can be suppressed.

The configurations other than the above are substantially the same as Embodiment 1. Thus, the same elements are marked with the same reference numerals, and repeated descriptions are omitted.

In the present embodiment, the central region 30a and the pair of end regions 31a include a plurality of bellows parts 33, 33a and supports 34, 34a. The plurality of bellows parts 33, 33a are formed in which the sectional shape taken along the longitudinal direction X is extendable or compressible in the longitudinal direction X, and are arranged at predetermined intervals in the longitudinal direction X. The supports 34, 34a connect the bellows parts 33, 33a adjacent to each other in the longitudinal direction X, and are formed thicker than the bellows parts 33, 33a in the direction orthogonal to the winding direction Y and the longitudinal direction X.

When the bellows part 33 is compressed, a plurality of supports 34 approach each other. Then, the end faces of the plurality of supports 34 constitute a plane as a whole. On the other hand, the compressed bellows part 33 is accommodated in a narrow space between the plurality of supports 34. Hence, the elastomer sheet 21a is of a planar shape as a whole. In this way, it is effective to apply the present embodiment to the region where the elastomer sheet 21a is compressible.

On the other hand, in the case where the bellows part 33a is extended, the bellows part 33a is deformed so as to approximate a flat surface. Since the bellows part 33a is supported by the support 34a, deformation of the extended bellows part 33a may be suppressed. Hence, the present embodiment can also be applied to a region where the elastomer sheet 21a is extendable. Accordingly, in both the central region 30a and the pair of end regions 31a of the elastomer sheet 21a, the present embodiment can be applied to any extendable or compressible portion.

### (Embodiment 3)

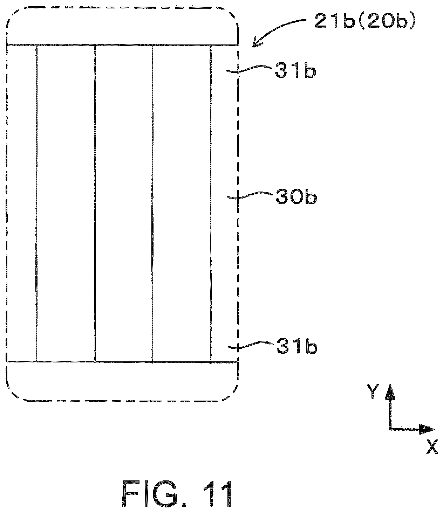

Subsequently, an elastomer sheet 21b according to an electrostatic sensor 20b of Embodiment 3 is described with reference to FIG. 11 to FIG. 12.

As shown in FIG. 11, in the elastomer sheet 21b of the present embodiment, a central region 30b and a pair of end regions 31b are continuously arranged in the winding direction Y. In the central region 30b and the pair of end regions 31b, the sectional shape taken along the longitudinal direction X is a sine wave-like shape constituted by a smooth curved surface over the entire length in the longitudinal direction X. The sine wave-like shape is continuous from the central region 30b to the pair of end regions 31b.

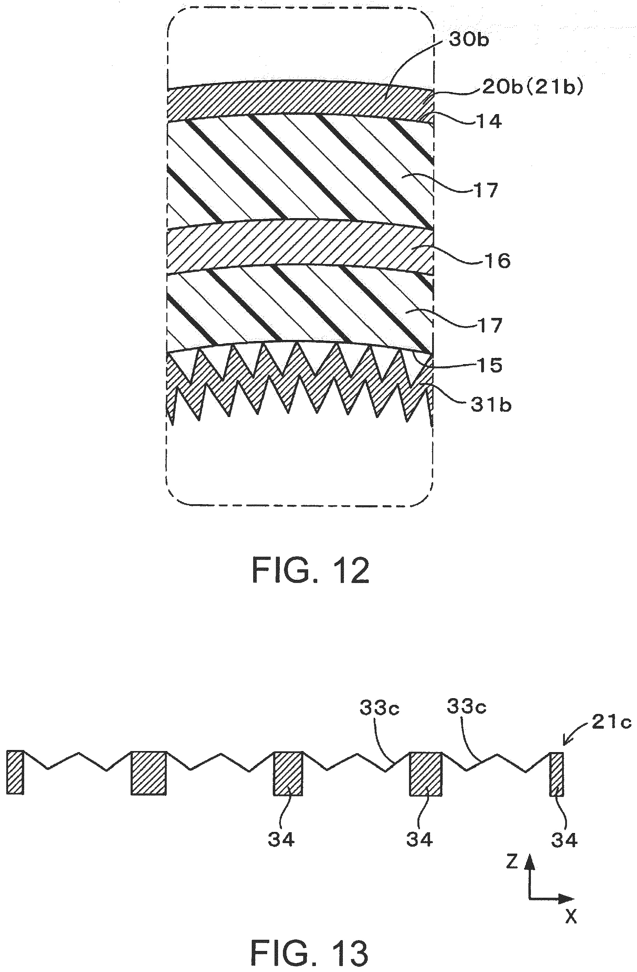

As shown in FIG. 12, on the inner peripheral surface 15 of the resin inner layer material 17 constituting the ring part 12, the sine wave-like shape is compressed with respect to the longitudinal direction X. Accordingly, the sine wave-like shape is deformed so that a mountain-shaped portion and a valley-shaped portion approach each other. The sine wave-like shape becomes a shape obtained by being compressed in the longitudinal direction X. Since the sine wave-like shape has a constant amplitude in a state before compression, the sine wave-like shape still has a constant amplitude in a state after compression. Since the sine wave-like shape has a constant wavelength in the state before compression, the sine wave-like shape still has a substantially constant wavelength in the state after compression. Accordingly, in the state after compression, in the pair of end regions 31b of the elastomer sheet 21b, nonuniform formation of relatively large wrinkles can be suppressed.

The configurations other than the above are substantially the same as Embodiment 1. Thus, the same elements are marked with the same reference numerals, and repeated descriptions are omitted.

### (Embodiment 4)

Next, an elastomer sheet 21c of Embodiment 4 is described with reference to FIG. 13. As shown in FIG. 13, in the elastomer sheet 21c of the present embodiment, a bellows part 33c is of a shape obtained by bending multiple times (three times in the present embodiment) when viewed in the winding direction Y. Accordingly, places where the plane is bent increase, thus making it easy to compress or expand/contract the bellows part 33c with respect to the longitudinal direction X. The bellows part 33c may include four or more bending places. The shape in which the bellows part 33c is bent multiple times is an example of the wave-like shape.

The configurations other than the above are substantially the same as Embodiment 1. Thus, the same elements are marked with the same reference numerals, and repeated descriptions are omitted. However, the shape of the bellows part 33c may be, for example, an N-shape when viewed in the winding direction Y, or may be any shape.

### (Embodiment 5)

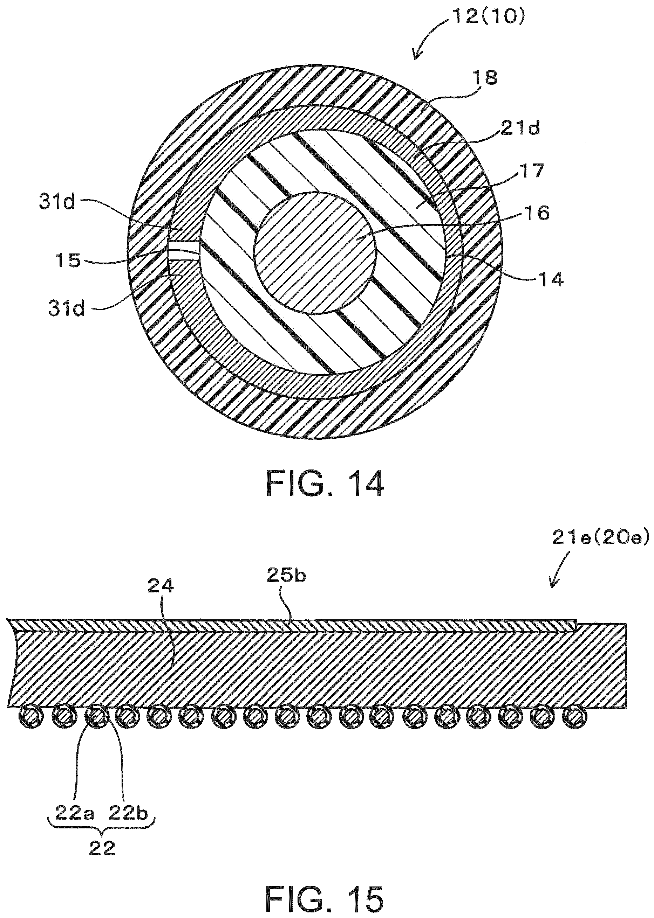

Next, an elastomer sheet 21d of Embodiment 5 is described with reference to FIG. 14. As shown in FIG. 14, a pair of end regions 31d of the elastomer sheet 21d may be configured to be arranged in positions apart from each other in a state of being wound around the ring part 12. A gap is formed between the pair of end regions 31d. This gap is formed in the same way over the entire area of the inner peripheral surface 15 of the ring part 12, and is not nonuniform. Hence, depending on the shape, material or the like of the skin material 18 covering the outer surface of the elastomer sheet 21d, it is possible to prevent the appearance from being impaired.

The configurations other than the above are substantially the same as Embodiment 1. Thus, the same elements are marked with the same reference numerals, and repeated descriptions are omitted.

### (Embodiment 6)

Next, an elastomer sheet 21e according to an electrostatic sensor 20e of Embodiment 6 is described with reference to FIG. 15. The heater-cum-shield wire 22 is attached to a second surface of the elastomer sheet 21e of the present embodiment. The heater-cum-shield wire 22 is bonded or thermally fused to the elastomer sheet 21e.

The configurations other than the above are substantially the same as Embodiment 1. Thus, the same elements are marked with the same reference numerals, and repeated descriptions are omitted.

According to the present embodiment, since the heater-cum-shield wire 22 is attached to the elastomer sheet 21e, the electrostatic sensor 20e can be made thin.

### (Embodiment 7)

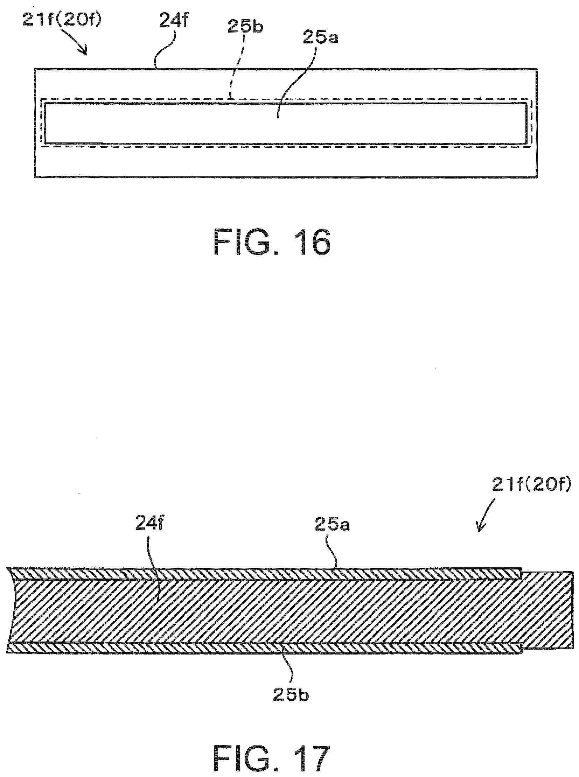

Next, an elastomer sheet 21f according to an electrostatic sensor 20f of the present embodiment is described with reference to FIG. 16 to FIG. 17. As shown in FIG. 16, on a first surface of the elastomer sheet 21f of the present embodiment, a single first electrode layer 25a of a sheet shape is arranged in the central position in the winding direction Y. As shown in FIG. 17, on a second surface of the elastomer sheet 21f, the second electrode layer 25b of a sheet shape is arranged in a position overlapping the first electrode sheet when viewed in the thickness direction Z of the elastomer sheet 21f. The second electrode layer 25b is formed in substantially the same size as the first electrode layer 25a. However, the elastomer sheet 21f may be configured so that there are arranged an elastomer layer 24f as well as the first electrode layer 25a and the second electrode layer 25b composed of a plurality of conductive members respectively on the first surface and the second surface of the elastomer layer 24f.

The configurations other than the above are substantially the same as Embodiment 1. Thus, the same elements are marked with the same reference numerals, and repeated descriptions are omitted.

By utilizing a change in capacitance between the first electrode layer 25a arranged on the first surface of the elastomer sheet 21 and the second electrode layer 25b arranged on the second surface of the elastomer sheet 21, the elastomer sheet 21 can be functioned as a sensor.

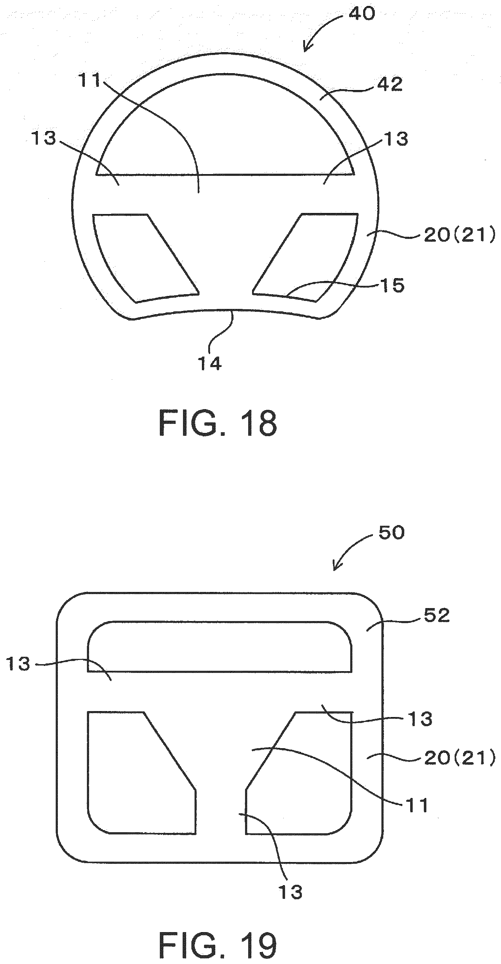

The technology disclosed in this specification is not limited to the embodiments described above and illustrated in the drawings, but also includes various aspects such as the following.
(1) The electrostatic sensor 20 or the elastomer sheet 21 according to the present embodiment can be applied to not only the steering 10, but also an interior part of an automobile.
(2) The shape of the ring part of the steering is not limited to an annular shape. For example, a ring part 42 of a steering 40 may be of a substantially D-shape. In this case, an upper part of the steering 40 constitutes a portion of the annulus. A lower part of the steering 40 may be formed in a linear shape, or may be formed in a gently curved shape that is convex upward as shown in FIG. 18. In this case, in the outer peripheral surface 14 of the resin inner layer material 17 constituting the ring part 42, the central region 30 of the elastomer sheet 21 wound round a lower region of the ring part 42 may be compressed; in the inner peripheral surface 15 of the resin inner layer material 17 constituting the ring part 12, the pair of end regions 31 of the elastomer sheet 21 wound around the lower region of the ring part 42 may be extended.
(3) A shape of a ring part 52 of a steering 50 may be, for example, a substantially rectangular shape as shown in FIG. 19, or may be any shape.

## Claims

1. An elastomer sheet (21, 21a, 21b, 21c, 21d, 21e, 21f), made of an elastomer and wound around a winding target member (10, 40, 50) having a three-dimensional curved surface, wherein the elastomer sheet (21, 21a, 21b, 21c, 21d, 21e, 21f) comprises:
a central region (30, 30a, 30b), located in a center of the elastomer sheet (21, 21a, 21b, 21c, 21d, 21e, 21f) in a winding direction (Y); and
a pair of end regions (31, 31a, 31b, 31d), located at an end of the elastomer sheet (21, 21a, 21b, 21c, 21d, 21e, 21f) in the winding direction (Y), **characterised in that**
the central region (30, 30a, 30b) and the pair of end regions (31, 31a, 31b, 31d) are formed in which a sectional shape of the elastomer sheet (21, 21a, 21b, 21c, 21d, 21e, 21f) taken along a cross direction (X) crossing the winding direction (Y) is a wave-like shape extendable or compressible in the cross direction (X); and
a rate of extension or compression of the central region (30, 30a, 30b) and a rate of extension or compression of the pair of end regions (31, 31a, 31b, 31d) with respect to the cross direction (X) are configured to differ from each other.

2. The elastomer sheet (21, 21a, 21b, 21c, 21d, 21e, 21f) according to claim 1, wherein
one of the central region (30, 30a, 30b) and the pair of end regions (31, 31a, 31b, 31d) is configured to be extendable, and the other is configured to be compressible.

3. The elastomer sheet (21, 21a, 21b, 21c, 21d, 21e, 21f) according to claim 2, further comprising:
a boundary region (32), located at a boundary between the central region (30, 30a, 30b) and the pair of end regions (31, 31a, 31b, 31d) in the winding direction (Y) of the elastomer sheet (21, 21a, 21b, 21c, 21d, 21e, 21f), and formed in which the sectional shape taken along the cross direction (X) is a flat plate shape in a state before being wound around the winding target member (10, 40, 50).

4. The elastomer sheet (21, 21a, 21b, 21c, 21d, 21e, 21f) according to claim 2, wherein
the central region (30, 30a, 30b) and the pair of end regions (31, 31a, 31b, 31d) are continuously arranged in the winding direction (Y).

5. The elastomer sheet (21, 21a, 21b, 21c, 21d, 21e, 21f) according to any one of claims 1 to 4, wherein
at least one of the central region (30, 30a, 30b) and the pair of end regions (31, 31a, 31b, 31d) is formed in which the sectional shape taken along the cross direction (X) is a wave-like shape over an entire length in the cross direction (X).

6. The elastomer sheet (21, 21a, 21b, 21c, 21d, 21e, 21f) according to claim 5, wherein
at least one of the central region (30, 30a, 30b) and the pair of end regions (31, 31a, 31b, 31d) is formed in which the sectional shape taken along the cross direction (X) is a sine wave-like shape in a state before being wound around the winding target member (10, 40, 50).

7. The elastomer sheet (21, 21a, 21b, 21c, 21d, 21e, 21f) according to claim 6, wherein
an amplitude of the sine wave-like shape decreases as a rate of extension or compression in the cross direction (X) decreases, and increases as the rate of extension or compression increases.

8. The elastomer sheet (21, 21a, 21b, 21c, 21d, 21e, 21f) according to claim 6 or 7, wherein
an amplitude of the sine wave-like shape continuously decreases as approaching ends of the pair of end regions (31, 31a, 31b, 31d) from the central region (30, 30a, 30b).

9. The elastomer sheet (21, 21a, 21b, 21c, 21d, 21e, 21f) according to claim 6 or 7, wherein
an amplitude of the sine wave-like shape decreases in stages as approaching ends of the pair of end regions (31, 31a, 31b, 31d) from the central region (30, 30a, 30b).

10. The elastomer sheet (21, 21a, 21b, 21c, 21d, 21e, 21f) according to any one of claims 1 to 9, wherein
at least one of the central region (30, 30a, 30b) and the pair of end regions (31, 31a, 31b, 31d) comprises:
a plurality of bellows parts (33, 33a, 33c), formed in which the sectional shape taken along the cross direction (X) is extendable or compressible in the cross direction (X), and arranged at predetermined intervals in the cross direction (X); and
a support (34, 34a), connecting the bellows parts (33, 33a, 33c) adjacent to each other in the cross direction (X), and formed thicker than the bellows part (33, 33a, 33c) in a direction orthogonal to the winding direction (Y) and the cross direction (X).

11. The elastomer sheet (21, 21a, 21b, 21c, 21d, 21e, 21f) according to claim 10, wherein
a width dimension of the bellows part (33, 33a, 33c) with respect to the cross direction (X) decreases as a rate of extension or compression in the cross direction (X) decreases, and increases as the rate of extension or compression increases; and
a width dimension of the support (34, 34a) with respect to the cross direction (X) increases as the rate of extension or compression in the cross direction (X) decreases, and decreases as the rate of extension or compression increases.

12. The elastomer sheet (21, 21a, 21b, 21c, 21d, 21e, 21f) according to claim 10 or 11, wherein
a width dimension of the bellows part (33, 33a, 33c) with respect to the cross direction (X) continuously increases as approaching ends of the pair of end regions (31, 31a, 31b, 31d), and a width dimension of the support (34, 34a) with respect to the cross direction (X) continuously decreases as approaching the ends of the pair of end regions (31, 31a, 31b, 31d).

13. The elastomer sheet (21, 21a, 21b, 21c, 21d, 21e, 21f) according to claim 10 or 11, wherein
a width dimension of the bellows part (33, 33a, 33c) with respect to the cross direction (X) increases in stages as approaching ends of the pair of end regions (31, 31a, 31b, 31d), and a width dimension of the support (34, 34a) with respect to the cross direction (X) decreases in stages as approaching the ends of the pair of end regions (31, 31a, 31b, 31d).

14. The elastomer sheet (21, 21a, 21b, 21c, 21d, 21e, 21f) according to any one of claims 1 to 13, wherein
the winding target member (10, 40, 50) is a shaft member (12) whose central axis is a convex curve;
the central region (30, 30a, 30b) is located on a surface on a side far from a center of curvature of the convex curve in the shaft member (12) in a circumferential direction, and is formed to be extendable in the cross direction (X); and
the pair of end regions (31, 31a, 31b, 31d) are located on a surface on a side close to the center of curvature of the convex curve in the shaft member (12) in the circumferential direction, and are formed to be compressible in the cross direction (X).

15. The elastomer sheet (21, 21a, 21b, 21c, 21d, 21e, 21f) according to claim 14, wherein
the winding target member (10, 40, 50) is a shaft member (12) of an annular shape;
the central region (30, 30a, 30b) is located on a surface on an outer peripheral side of the annular shape of the shaft member (12), and is formed to be extendable in the cross direction (X); and
the pair of end regions (31, 31a, 31b, 31d) are located on a surface on an inner peripheral side of the annular shape of the shaft member (12), and are formed to be compressible in the cross direction (X).

16. The elastomer sheet (21, 21a, 21b, 21c, 21d, 21e, 21f) according to claim 14 or 15, wherein
the central region (30, 30a, 30b) is formed in which the sectional shape taken along the cross direction (X) is a wave-like shape over an entire length in the cross direction (X); and
the pair of end regions (31, 31a, 31b, 31d) comprise:
a plurality of bellows parts (33, 33a, 33c), formed in which the sectional shape taken along the cross direction (X) is extendable or compressible in the cross direction (X), and arranged at predetermined intervals in the cross direction (X); and
a support (34, 34a), connecting the bellows parts (33, 33a, 33c) adjacent to each other in the cross direction (X), and formed thicker than the bellows part (33, 33a, 33c) in a direction orthogonal to the winding direction (Y) and the cross direction (X).

17. The elastomer sheet (21, 21a, 21b, 21c, 21d, 21e, 21f) according to claim 14 or 15, wherein
the central region (30, 30a, 30b) and the pair of end regions (31, 31a, 31b, 31d) comprise:
a plurality of bellows parts (33, 33a, 33c), formed in which the sectional shape taken along the cross direction (X) is extendable or compressible in the cross direction (X), and arranged at predetermined intervals in the cross direction (X); and
a support (34, 34a), connecting the bellows parts (33, 33a, 33c) adjacent to each other in the cross direction (X), and formed thicker than the bellows part (33, 33a, 33c) in a direction orthogonal to the winding direction (Y) and the cross direction (X).

18. The elastomer sheet (21, 21a, 21b, 21c, 21d, 21e, 21f) according to claim 14 or 15, wherein
the central region (30, 30a, 30b) and the pair of end regions (31, 31a, 31b, 31d) are formed in which the sectional shape taken along the cross direction (X) is a wave-like shape over an entire length in the cross direction (X), and are continuously arranged in the winding direction (Y).

19. The elastomer sheet (21, 21a, 21b, 21c, 21d, 21e, 21f) according to any one of claims 1 to 18, comprising:
an elastomer layer (24, 24f), made of an elastomer; and
an electrode layer (25a, 25b), arranged on a first surface of the elastomer layer (24, 24f).

20. The elastomer sheet (21, 21a, 21b, 21c, 21d, 21e, 21f) according to claim 19, wherein
a plurality of the electrode layers (25a, 25b) are arranged in parallel on the first surface of the elastomer layer (24, 24f).

21. An electrostatic sensor (20, 20a, 20b, 20e, 20f), comprising
the elastomer sheet (21, 21a, 21b, 21c, 21d, 21e, 21f) according to claim 19 or 20, wherein the elastomer sheet further comprises an electrode sheet (25b) arranged on a second surface of the elastomer layer (24, 24f) opposite to the first surface.

22. An electrostatic sensor (20, 20a, 20b, 20e, 20f), comprising
the elastomer sheet (21, 21a, 21b, 21c, 21d, 21e, 21f) according to claim 19 or 20, wherein the elastomer sheet further comprises a heater sheet arranged on a second surface of the elastomer layer (24, 24f) opposite to the first surface, the heater sheet being provided in which a heater-cum-shield wire (22) that serves both as a heater wire and a shield wire is integrated with a base material sheet (23).

23. An electrostatic sensor (20, 20a, 20b, 20e, 20f), wherein
the elastomer sheet (21, 21a, 21b, 21c, 21d, 21e, 21f) according to claim 19 or 20 further comprises a heater-cum-shield wire (22) that is attached to a second surface of the elastomer layer (24, 24f) opposite to the first surface and serves both as a heater wire and a shield wire.

24. An electrostatic sensor (20, 20a, 20b, 20e, 20f), comprising:
the elastomer sheet (21, 21a, 21b, 21c, 21d, 21e, 21f) according to any one of claims 1 to 18; and
a first electrode sheet (25a), arranged on a first surface of the elastomer sheet (21, 21a, 21b, 21c, 21d, 21e, 21f).

25. The electrostatic sensor (20, 20a, 20b, 20e, 20f) according to claim 24, comprising:
a plurality of the first electrode sheets (25a) on the first surface of the elastomer sheet (21, 21a, 21b, 21c, 21d, 21e, 21f).

26. The electrostatic sensor (20, 20a, 20b, 20e, 20f) according to claim 24, comprising:
a second electrode sheet (25b), arranged on a second surface of the elastomer sheet (21, 21a, 21b, 21c, 21d, 21e, 21f) opposite to the first surface.

27. The electrostatic sensor (20, 20a, 20b, 20e, 20f) according to claim 24, comprising:
a heater sheet, arranged on a second surface of the elastomer sheet (21, 21a, 21b, 21c, 21d, 21e, 21f) opposite to the first surface, in which a heater-cum-shield wire (22) that serves both as a heater wire and a shield wire is integrated with a base material sheet (23).

28. The electrostatic sensor (20, 20a, 20b, 20e, 20f) according to claim 24, comprising:
a heater-cum-shield wire (22), attached to a second surface of the elastomer sheet (21, 21a, 21b, 21c, 21d, 21e, 21f) opposite to the first surface and serving both as a heater wire and a shield wire.

## Patentansprüche

1. Elastomerfolie (21, 21a, 21b, 21c, 21d, 21e, 21f), die aus einem Elastomer hergestellt ist und um ein Wickelzielelement (10, 40, 50), das eine dreidimensionale gekrümmte Oberfläche aufweist, gewickelt ist, wobei die Elastomerfolie (21, 21a, 21b, 21c, 21d, 21e, 21f) umfasst:
eine mittige Region (30, 30a, 30b), der sich in einer Mitte der Elastomerfolie (21, 21a, 21b, 21c, 21d, 21e, 21f) in einer Wickelrichtung (Y) befindet; und
ein Paar von Endregionen (31, 31a, 31b, 31d), die sich an einem Ende der Elastomerfolie (21, 21a, 21b, 21c, 21d, 21e, 21f) in der Wickelrichtung (Y) befinden,
**dadurch gekennzeichnet, dass**
die mittige Region (30, 30a, 30b) und das Paar von Endregionen (31, 31a, 31b, 31d) so gebildet sind, dass eine Querschnittsform der Elastomerfolie (21, 21a, 21b, 21c, 21d, 21e, 21f) entlang einer die Wickelrichtung (Y) kreuzenden Querrichtung (X) eine wellenartige Form ist, die in der Querrichtung (X) dehnbar oder komprimierbar ist; und
eine Dehnungs- oder Kompressionsrate der mittigen Region (30, 30a, 30b) und eine Dehnungs- oder Kompressionsrate des Paares von Endregionen (31, 31a, 31b, 31d) in Bezug auf die Querrichtung (X) so eingerichtet sind, dass sie sich voneinander unterscheiden.

2. Elastomerfolie (21, 21a, 21b, 21c, 21d, 21e, 21f) nach Anspruch 1, wobei
eines von der mittigen Region (30, 30a, 30b) und dem Paar von Endregionen (31, 31a, 31b, 31d) so eingerichtet ist, dass es dehnbar ist, und das andere so eingerichtet ist, dass es komprimierbar ist.

3. Elastomerfolie (21, 21a, 21b, 21c, 21d, 21e, 21f) nach Anspruch 2, des Weiteren umfassend:
eine Grenzregion (32), die sich an einer Grenze zwischen der mittigen Region (30, 30a, 30b) und dem Paar von Endregionen (31, 31a, 31b, 31d) in der Wickelrichtung (Y) der Elastomerfolie (21, 21a, 21b, 21c, 21d, 21e, 21f) befindet und so gebildet ist, dass die Querschnittsform entlang der Querrichtung (X) in einem Zustand vor dem Wickeln um das Wickelzielelement (10, 40, 50) eine Form einer flachen Platte hat.

4. Elastomerfolie (21, 21a, 21b, 21c, 21d, 21e, 21f) nach Anspruch 2, wobei
die mittige Region (30, 30a, 30b) und das Paar von Endregionen (31, 31a, 31b, 31d) in der Wickelrichtung (Y) kontinuierlich angeordnet sind.

5. Elastomerfolie (21, 21a, 21b, 21c, 21d, 21e, 21f) nach einem der Ansprüche 1 bis 4, wobei
mindestens eines von der mittigen Region (30, 30a, 30b) und dem Paar von Endregionen (31, 31a, 31b, 31d) so gebildet ist, dass die Querschnittsform entlang der Querrichtung (X) über eine gesamte Länge in der Querrichtung (X) eine wellenartige Form ist.

6. Elastomerfolie (21, 21a, 21b, 21c, 21d, 21e, 21f) nach Anspruch 5, wobei mindestens eines von der mittigen Region (30, 30a, 30b) und dem Paar von Endregionen (31, 31a, 31b, 31d) so gebildet ist, dass die Querschnittsform entlang der Querrichtung (X) in einem Zustand vor dem Wickeln um das Wickelzielelement (10, 40, 50) eine sinuswellenartige Form ist.

7. Elastomerfolie (21, 21a, 21b, 21c, 21d, 21e, 21f) nach Anspruch 6, wobei
die Amplitude der sinuswellenartigen Form in dem Maße abnimmt, wie die Dehnungs- oder Komprimierungsrate in der Querrichtung (X) abnimmt, und in dem Maße zunimmt, wie die Dehnungs- oder Komprimierungsrate zunimmt.

8. Elastomerfolie (21, 21a, 21b, 21c, 21d, 21e, 21f) nach Anspruch 6 oder 7, wobei
eine Amplitude der sinuswellenartigen Form in dem Maße kontinuierlich abnimmt, wie sie sich Enden des Paares von Endregionen (31, 31a, 31b, 31d), ausgehend von der mittigen Region (30, 30a, 30b), nähert.

9. Elastomerfolie (21, 21a, 21b, 21c, 21d, 21e, 21f) nach Anspruch 6 oder 7, wobei
eine Amplitude der sinuswellenartigen Form in dem Maße stufenweise abnimmt, wie sie sich Enden des Paares von Endregionen (31, 31a, 31b, 31d), ausgehend von der mittigen Region (30, 30a, 30b), nähert.

10. Elastomerfolie (21, 21a, 21b, 21c, 21d, 21e, 21f) nach einem der Ansprüche 1 bis 9, wobei
mindestens eines von der mittigen Region (30, 30a, 30b) und dem Paar von Endregionen (31, 31a, 31b, 31d) umfasst:
mehrere Faltenbalgteile (33, 33a, 33c), die so gebildet sind, dass die Querschnittsform entlang der Querrichtung (X) in der Querrichtung (X) dehnbar oder komprimierbar ist, und in zuvor festgelegten Intervallen in der Querrichtung (X) angeordnet sind; und
eine Stütze (34, 34a), die die Faltenbalgteile (33, 33a, 33c), die in der Querrichtung (X) nebeneinander liegen, verbindet und in einer Richtung orthogonal zur Wickelrichtung (Y) und zur Querrichtung (X) dicker gebildet ist als der Faltenbalgteil (33, 33a, 33c).

11. Elastomerfolie (21, 21a, 21b, 21c, 21d, 21e, 21f) nach Anspruch 10, wobei
eine Breitenabmessung des Faltenbalgteils (33, 33a, 33c) in Bezug auf die Querrichtung (X) in dem Maße abnimmt, wie eine Dehnungs- oder Komprimierungsrate in der Querrichtung (X) abnimmt, und in dem Maße zunimmt, wie die Dehnungs- oder Komprimierungsrate zunimmt; und
eine Breitenabmessung der Stütze (34, 34a) in Bezug auf die Querrichtung (X) in dem Maße zunimmt, wie die Dehnungs- oder Komprimierungsrate in der Querrichtung (X) abnimmt, und in dem Maße abnimmt, wie die Dehnungs-oder Komprimierungsrate zunimmt.

12. Elastomerfolie (21, 21a, 21b, 21c, 21d, 21e, 21f) nach Anspruch 10 oder 11, wobei
eine Breitenabmessung des Faltenbalgteils (33, 33a, 33c) in Bezug auf die Querrichtung (X) in dem Maße kontinuierlich zunimmt, wie sie sich Enden des Paares von Endregionen (31, 31a, 31b, 31d) nähert, und eine Breitenabmessung der Stütze (34, 34a) in Bezug auf die Querrichtung (X) in dem Maße kontinuierlich abnimmt, wie sie sich Enden des Paares von Endregionen (31, 31a, 31b, 31d) nähert.

13. Elastomerfolie (21, 21a, 21b, 21c, 21d, 21e, 21f) nach Anspruch 10 oder 11, wobei
eine Breitenabmessung des Faltenbalgteils (33, 33a, 33c) in Bezug auf die Querrichtung (X) in dem Maße stufenweise zunimmt, wie sie sich Enden des Paares von Endregionen (31, 31a, 31b, 31d) nähert, und eine Breitenabmessung der Stütze (34, 34a) in Bezug auf die Querrichtung (X) in dem Maße stufenweise abnimmt, wie sie sich Enden des Paares von Endregionen (31, 31a, 31b, 31d) nähert.

14. Elastomerfolie (21, 21a, 21b, 21c, 21d, 21e, 21f) nach einem der Ansprüche 1 bis 13, wobei
das Wickelzielelement (10, 40, 50) ein Wellenelement (12) ist, dessen Mittelachse eine konvexe Kurve ist;
sich die mittige Region (30, 30a, 30b) an einer Fläche auf einer Seite befindet, die von einer Krümmungsmitte der konvexen Krümmung in dem Wellenelement (12) in einer Umfangsrichtung entfernt liegt, und so gebildet ist, dass sie in der Querrichtung (X) dehnbar ist; und
sich das Paar von Endregionen (31, 31a, 31b, 31d) an einer Fläche auf einer Seite befinden, die nahe bei der Krümmungsmitte der konvexen Kurve in dem Wellenelement (12) in der Umfangsrichtung liegt, und so gebildet sind, dass sie in der Querrichtung (X) komprimierbar sind.

15. Elastomerfolie (21, 21a, 21b, 21c, 21d, 21e, 21f) nach Anspruch 14, wobei
das Wickelzielelement (10, 40, 50) ein Wellenelement (12) mit einer Ringform ist;
sich die mittige Region (30, 30a, 30b) an einer Fläche auf einer Außenumfangsseite der Ringform des Wellenelements (12) befindet und so gebildet ist, dass sie in der Querrichtung (X) dehnbar ist; und
sich das Paar von Endregionen (31, 31a, 31b, 31d) an einer Fläche auf einer Innenumfangsseite der Ringform des Wellenelements (12) befinden und so gebildet sind, dass sie in der Querrichtung (X) komprimierbar sind.

16. Elastomerfolie (21, 21a, 21b, 21c, 21d, 21e, 21f) nach Anspruch 14 oder 15, wobei
die mittige Region (30, 30a, 30b) so gebildet ist, dass die Querschnittsform entlang der Querrichtung (X) über die gesamte Länge in der Querrichtung (X) eine wellenartige Form ist; und
das Paar von Endregionen (31, 31a, 31b, 31d) umfasst:
mehrere Faltenbalgteile (33, 33a, 33c), die so gebildet sind, dass die Querschnittsform entlang der Querrichtung (X) in der Querrichtung (X) dehnbar oder komprimierbar ist, und in zuvor festgelegten Intervallen in der Querrichtung (X) angeordnet sind; und
eine Stütze (34, 34a), die die Faltenbalgteile (33, 33a, 33c), die in der Querrichtung (X) nebeneinander liegen, verbindet und in einer Richtung orthogonal zur Wickelrichtung (Y) und zur Querrichtung (X) dicker gebildet ist als der Faltenbalgteil (33, 33a, 33c).

17. Elastomerfolie (21, 21a, 21b, 21c, 21d, 21e, 21f) nach Anspruch 14 oder 15, wobei
die mittige Region (30, 30a, 30b) und das Paar von Endregionen (31, 31a, 31b, 31d) umfassen:
mehrere Faltenbalgteile (33, 33a, 33c), die so gebildet sind, dass die Querschnittsform entlang der Querrichtung (X) in der Querrichtung (X) dehnbar oder komprimierbar ist, und in zuvor festgelegten Intervallen in der Querrichtung (X) angeordnet sind; und
eine Stütze (34, 34a), die die Faltenbalgteile (33, 33a, 33c), die in der Querrichtung (X) nebeneinander liegen, verbindet und in einer Richtung orthogonal zur Wickelrichtung (Y) und zur Querrichtung (X) dicker gebildet ist als der Faltenbalgteil (33, 33a, 33c).

18. Elastomerfolie (21, 21a, 21b, 21c, 21d, 21e, 21f) nach Anspruch 14 oder 15, wobei die mittige Region (30, 30a, 30b) und das Paar von Endregionen (31, 31a, 31b, 31d) so gebildet sind, dass die Querschnittsform entlang der Querrichtung (X) über eine gesamte Länge in der Querrichtung (X) eine wellenartige Form ist, und in der Wickelrichtung (Y) kontinuierlich angeordnet sind.

19. Elastomerfolie (21, 21a, 21b, 21c, 21d, 21e, 21f) nach einem der Ansprüche 1 bis 18, umfassend:
eine Elastomerschicht (24, 24f), die aus einem Elastomer hergestellt ist; und
eine Elektrodenschicht (25a, 25b), die an einer ersten Fläche der Elastomerschicht (24, 24f) angeordnet ist.

20. Elastomerfolie (21, 21a, 21b, 21c, 21d, 21e, 21 f) nach Anspruch 19, wobei
mehrere der Elektrodenschichten (25a, 25b) parallel an der ersten Fläche der Elastomerschicht (24, 24f) angeordnet sind.

21. Elektrostatischer Sensor (20, 20a, 20b, 20e, 20f), umfassend die Elastomerfolie (21, 21a, 21b, 21c, 21d, 21e, 21f) nach Anspruch 19 oder 20, wobei die Elastomerfolie des Weiteren eine Elektrodenfolie (25b) umfasst, die an einer zweiten Fläche der Elastomerschicht (24, 24f) gegenüber der ersten Fläche angeordnet ist.

22. Elektrostatischer Sensor (20, 20a, 20b, 20e, 20f), umfassend die Elastomerfolie (21, 21a, 21b, 21c, 21d, 21e, 21f) nach Anspruch 19 oder 20, wobei die Elastomerfolie des Weiteren eine Heizfolie umfasst, die an einer zweiten Fläche der Elastomerschicht (24, 24f) gegenüber der ersten Fläche angeordnet ist, wobei die Heizfolie so bereitgestellt ist, dass ein Heiz- und Abschirmdraht (22), der sowohl als ein Heizdraht als auch als ein Abschirmdraht dient, in eine Basismaterialfolie (23) integriert ist.

23. Elektrostatischer Sensor (20, 20a, 20b, 20e, 20f), wobei
die Elastomerfolie (21, 21a, 21b, 21c, 21d, 21e, 21f) nach Anspruch 19 oder 20 des Weiteren einen Heiz- und Abschirmdraht (22) umfasst, der an einer zweiten Fläche der Elastomerschicht (24, 24f) gegenüber der ersten Fläche angebracht ist und sowohl als ein Heizdraht als auch als ein Abschirmdraht dient.

24. Elektrostatischer Sensor (20, 20a, 20b, 20e, 20f), umfassend:
die Elastomerfolie (21, 21a, 21b, 21c, 21d, 21e, 21f) nach einem der Ansprüche 1 bis 18; und
eine erste Elektrodenfolie (25a), die an einer ersten Fläche der Elastomerfolie (21, 21a, 21b, 21c, 21d, 21e, 21f) angeordnet ist.

25. Elektrostatischer Sensor (20, 20a, 20b, 20e, 20f) nach Anspruch 24, umfassend:
mehrere der ersten Elektrodenfolien (25a) an der ersten Fläche der Elastomerfolie (21, 21a, 21b, 21c, 21d, 21e, 21f).

26. Elektrostatischer Sensor (20, 20a, 20b, 20e, 20f) nach Anspruch 24, umfassend:
eine zweite Elektrodenfolie (25b), die an einer zweiten Fläche der Elastomerfolie (21, 21a, 21b, 21c, 21d, 21e, 21f) gegenüber der ersten Fläche angeordnet ist.

27. Elektrostatischer Sensor (20, 20a, 20b, 20e, 20f) nach Anspruch 24, umfassend:
eine Heizfolie, die an einer zweiten Fläche der Elastomerfolie (21, 21a, 21b, 21c, 21d, 21e, 21f) gegenüber der ersten Fläche angeordnet ist, wobei ein Heiz- und Abschirmdraht (22), der sowohl als ein Heizdraht als auch als ein Abschirmdraht dient, in eine Basismaterialfolie (23) integriert ist.

28. Elektrostatischer Sensor (20, 20a, 20b, 20e, 20f) nach Anspruch 24, umfassend:
einen Heiz- und Abschirmdraht (22), der an einer zweiten Fläche der Elastomerfolie (21, 21a, 21b, 21c, 21d, 21e, 21f) gegenüber der ersten Fläche angebracht ist und sowohl als ein Heizdraht als auch als ein Abschirmdraht dient.

## Revendications

1. Feuille élastomère (21, 21a, 21b, 21c, 21d, 21e, 21f) constituée d'un élastomère et enroulée autour d'un élément cible d'enroulement (10, 40, 50) présentant une surface courbe tridimensionnelle, dans laquelle la feuille élastomère (21, 21a, 21b, 21c, 21d, 21e, 21f) comprend :
une région centrale (30, 30a, 30b) située au centre de la feuille élastomère (21, 21a, 21b, 21c, 21d, 21e, 21f) dans une direction d'enroulement (Y) ; et
une paire de régions d'extrémité (31, 31a, 31b, 31d) situées à une extrémité de la feuille élastomère (21, 21a, 21b, 21c, 21d, 21e, 21f) dans la direction d'enroulement (Y),
**caractérisée en ce que**
la région centrale (30, 30a, 30b) et la paire de régions d'extrémité (31, 31a, 31b, 31d) sont formées de telle sorte qu'une section transversale de la feuille élastomère (21, 21a, 21b, 21c, 21d, 21e, 21f) selon une direction transversale (X) croisant la direction d'enroulement (Y) présente une forme ondulée extensible ou compressible dans la direction transversale (X) ; et
le taux d'extension ou de compression de la région centrale (30, 30a, 30b) et le taux d'extension ou de compression de la paire de régions d'extrémité (31, 31a, 31b, 31d) par rapport à la direction transversale (X) sont configurés pour différer l'un de l'autre.

2. Feuille élastomère (21, 21a, 21b, 21c, 21d, 21e, 21f) selon la revendication 1, dans laquelle soit la région centrale (30, 30a, 30b), soit la paire de régions d'extrémité (31, 31a, 31b, 31d) est configurée pour être extensible, et l'autre est configurée pour être compressible.

3. Feuille élastomère (21, 21a, 21b, 21c, 21d, 21e, 21f) selon la revendication 2, comprenant en outre :
une région de délimitation (32) située à une délimitation entre la région centrale (30, 30a, 30b) et la paire de régions d'extrémité (31, 31a, 31b, 31d) dans la direction d'enroulement (Y) de la feuille élastomère (21, 21a, 21b, 21c, 21d, 21e, 21f), et formée de telle sorte que la section transversale selon la direction transversale (X) présente une forme de plaque plane dans un état avant son enroulement autour de l'élément cible d'enroulement (10, 40, 50).

4. Feuille élastomère (21, 21a, 21b, 21c, 21d, 21e, 21f) selon la revendication 2, dans laquelle
la région centrale (30, 30a, 30b) et la paire de régions d'extrémité (31, 31a, 31b, 31d) sont agencées de manière continue dans la direction d'enroulement (Y).

5. Feuille élastomère (21, 21a, 21b, 21c, 21d, 21e, 21f) selon l'une quelconque des revendications 1 à 4, dans laquelle
la région centrale (30, 30a, 30b) et/ou la paire de régions d'extrémité (31, 31a, 31b, 31d) est formée de telle sorte que la section transversale selon la direction transversale (X) présente une forme ondulée sur une longueur complète dans la direction transversale (X).

6. Feuille élastomère (21, 21a, 21b, 21c, 21d, 21e, 21f) selon la revendication 5, dans laquelle
la région centrale (30, 30a, 30b) et/ou la paire de régions d'extrémité (31, 31a, 31b, 31d) est formée de telle sorte que la section transversale selon la direction transversale (X) présente une forme ondulée sinusoïdale dans un état avant d'être enroulée autour de l'élément cible d'enroulement (10, 40, 50).

7. Feuille élastomère (21, 21a, 21b, 21c, 21d, 21e, 21f) selon la revendication 6, dans laquelle
l'amplitude de la forme ondulée sinusoïdale diminue à mesure que le taux d'extension ou de compression dans la direction transversale (X) diminue, et augmente à mesure que le taux d'extension ou de compression augmente.

8. Feuille élastomère (21, 21a, 21b, 21c, 21d, 21e, 21f) selon la revendication 6 ou 7, dans laquelle
l'amplitude de la forme ondulée sinusoïdale diminue de manière continue vers les extrémités de la paire de régions d'extrémité (31, 31a, 31b, 31d) depuis la région centrale (30, 30a, 30b).

9. Feuille élastomère (21, 21a, 21b, 21c, 21d, 21e, 21f) selon la revendication 6 ou 7, dans laquelle
l'amplitude de la forme ondulée sinusoïdale diminue pas à pas vers les extrémités de la paire de régions d'extrémité (31, 31a, 31b, 31d) depuis la région centrale (30, 30a, 30b).

10. Feuille élastomère (21, 21a, 21b, 21c, 21d, 21e, 21f) selon l'une quelconque des revendications 1 à 9, dans laquelle
la région centrale (30, 30a, 30b) et/ou la paire de régions d'extrémité (31, 31a, 31b, 31d) comprend :
une pluralité de parties de soufflet (33, 33a, 33c) formées de telle sorte que la section transversale selon la direction transversale (X) présente une forme extensible ou compressible dans la direction transversale (X), et agencées à intervalles prédéterminés dans la direction transversale (X) ; et
un support (34, 34a) connectant les parties de soufflet (33, 33a, 33c) adjacentes les unes aux autres dans la direction transversale (X), et formé de manière à être plus épais que la partie de soufflet (33, 33a, 33c) dans une direction orthogonale à la direction d'enroulement (Y) et à la direction transversale (X).

11. Feuille élastomère (21, 21a, 21b, 21c, 21d, 21e, 21f) selon la revendication 10, dans laquelle
une dimension en largeur de la partie de soufflet (33, 33a, 33c) par rapport à la direction transversale (X) diminue à mesure que le taux d'extension ou de compression dans la direction transversale (X) diminue, et augmente à mesure que le taux d'extension ou de compression augmente ; et
une dimension en largeur du support (34, 34a) par rapport à la direction transversale (X) augmente à mesure que le taux d'extension ou de compression dans la direction transversale (X) diminue, et diminue à mesure que le taux d'extension ou de compression augmente.

12. Feuille élastomère (21, 21a, 21b, 21c, 21d, 21e, 21f) selon la revendication 10 ou 11, dans laquelle
une dimension en largeur de la partie de soufflet (33, 33a, 33c) par rapport à la direction transversale (X) augmente de manière continue vers les extrémités de la paire de régions d'extrémité (31, 31a, 31b, 31d), et une dimension en largeur du support (34, 34a) par rapport à la direction transversale (X) diminue de manière continue vers les extrémités de la paire de régions d'extrémité (31, 31a, 31b, 31d).

13. Feuille élastomère (21, 21a, 21b, 21c, 21d, 21e, 21f) selon la revendication 10 ou 11, dans laquelle
une dimension en largeur de la partie de soufflet (33, 33a, 33c) par rapport à la direction transversale (X) augmente pas à pas vers les extrémités de la paire de régions d'extrémité (31, 31a, 31b, 31d), et une dimension en largeur du support (34, 34a) par rapport à la direction transversale (X) diminue pas à pas vers les extrémités de la paire de régions d'extrémité (31, 31a, 31b, 31d).

14. Feuille élastomère (21, 21a, 21b, 21c, 21d, 21e, 21f) selon l'une quelconque des revendications 1 à 13, dans laquelle
l'élément cible d'enroulement (10, 40, 50) est un élément d'arbre (12) dont l'axe central est une courbe convexe ;
la région centrale (30, 30a, 30b) est située sur une surface d'un côté éloigné d'un centre de courbure de la courbe convexe dans l'élément d'arbre (12) dans une direction circonférentielle, et est formée pour être extensible dans la direction transversale (X) ; et
les régions de la paire de régions d'extrémité (31, 31a, 31b, 31d) sont situées sur une surface d'un côté proche du centre de courbure de la courbe convexe dans l'élément d'arbre (12) dans la direction circonférentielle, et sont formées pour être compressibles dans la direction transversale (X).

15. Feuille élastomère (21, 21a, 21b, 21c, 21d, 21e, 21f) selon la revendication 14, dans laquelle
l'élément cible d'enroulement (10, 40, 50) est un élément d'arbre (12) de forme annulaire ;
la région centrale (30, 30a, 30b) est située sur une surface d'un côté périphérique externe de la forme annulaire de l'élément d'arbre (12), et est formée pour être extensible dans la direction transversale (X) ; et
les régions de la paire de régions d'extrémité (31, 31a, 31b, 31d) sont situées sur une surface d'un côté périphérique interne de la forme annulaire de l'élément d'arbre (12), et sont formées pour être compressibles dans la direction transversale (X).

16. Feuille élastomère (21, 21a, 21b, 21c, 21d, 21e, 21f) selon la revendication 14 ou 15, dans laquelle
la région centrale (30, 30a, 30b) est formée de telle sorte que la section transversale selon la direction transversale (X) présente une forme ondulée sur une longueur complète dans la direction transversale (X) ; et
la paire de régions d'extrémité (31, 31a, 31b, 31d) comprend :
une pluralité de parties de soufflet (33, 33a, 33c) formées de telle sorte que la section transversale selon la direction transversale (X) présente une forme extensible ou compressible dans la direction transversale (X), et agencées à intervalles prédéterminés dans la direction transversale (X) ; et
un support (34, 34a) connectant les parties de soufflet (33, 33a, 33c) adjacentes les unes aux autres dans la direction transversale (X), et formé de manière à être plus épais que la partie de soufflet (33, 33a, 33c) dans une direction orthogonale à la direction d'enroulement (Y) et à la direction transversale (X).

17. Feuille élastomère (21, 21a, 21b, 21c, 21d, 21e, 21f) selon la revendication 14 ou 15, dans laquelle
la région centrale (30, 30a, 30b) et la paire de régions d'extrémité (31, 31a, 31b, 31d) comprennent :
une pluralité de parties de soufflet (33, 33a, 33c) formées de telle sorte que la section transversale selon la direction transversale (X) présente une forme extensible ou compressible dans la direction transversale (X), et agencées à intervalles prédéterminés dans la direction transversale (X) ; et
un support (34, 34a) connectant les parties de soufflet (33, 33a, 33c) adjacentes les unes aux autres dans la direction transversale (X), et formé de manière à être plus épais que la partie de soufflet (33, 33a, 33c) dans une direction orthogonale à la direction d'enroulement (Y) et à la direction transversale (X).

18. Feuille élastomère (21, 21a, 21b, 21c, 21d, 21e, 21f) selon la revendication 14 ou 15, dans laquelle
la région centrale (30, 30a, 30b) et la paire de régions d'extrémité (31, 31a, 31b, 31d) sont formées de telle sorte que la section transversale selon la direction transversale (X) présente une forme ondulée sur une longueur complète dans la direction transversale (X), et sont agencées de manière continue dans la direction d'enroulement (Y).

19. Feuille élastomère (21, 21a, 21b, 21c, 21d, 21e, 21f) selon l'une quelconque des revendications 1 à 18, comprenant :
une couche élastomère (24, 24f) constituée d'un élastomère ; et
une couche d'électrode (25a, 25b) agencée sur une première surface de la couche élastomère (24, 24f).

20. Feuille élastomère (21, 21a, 21b, 21c, 21d, 21e, 21f) selon la revendication 19, dans laquelle
une pluralité de couches d'électrodes (25a, 25b) sont agencées en parallèle sur la première surface de la couche élastomère (24, 24f).

21. Capteur électrostatique (20, 20a, 20b, 20e, 20f) comprenant la feuille élastomère (21, 21a, 21b, 21c, 21d, 21e, 21f) selon la revendication 19 ou 20,
dans lequel la feuille élastomère comprend en outre une feuille d'électrode (25b) agencée sur une deuxième surface de la couche élastomère (24, 24f) opposée à la première surface.

22. Capteur électrostatique (20, 20a, 20b, 20e, 20f) comprenant la feuille élastomère (21, 21a, 21b, 21c, 21d, 21e, 21f) selon la revendication 19 ou 20,
dans lequel la feuille élastomère comprend en outre une feuille chauffante agencée sur une deuxième surface de la couche élastomère (24, 24f) opposée à la première surface, la feuille chauffante étant pourvue de telle sorte qu'un fil chauffant de blindage (22), qui sert à la fois de fil chauffant et de fil de blindage, est intégré à une feuille de matériau de base (23).

23. Capteur électrostatique (20, 20a, 20b, 20e, 20f), dans lequel
la feuille élastomère (21, 21a, 21b, 21c, 21d, 21e, 21f) selon la revendication 19 ou 20 comprend en outre un fil chauffant de blindage (22) qui est attaché à une deuxième surface de la couche élastomère (24, 24f) opposée à la première surface et sert à la fois de fil chauffant et de fil de blindage.

24. Capteur électrostatique (20, 20a, 20b, 20e, 20f) comprenant :
la feuille élastomère (21, 21a, 21b, 21c, 21d, 21e, 21f) selon l'une quelconque des revendications 1 à 18 ; et
une première feuille d'électrode (25a) agencée sur une première surface de la feuille élastomère (21, 21a, 21b, 21c, 21d, 21e, 21f).

25. Capteur électrostatique (20, 20a, 20b, 20e, 20f) selon la revendication 24, comprenant :
une pluralité de premières feuilles d'électrodes (25a) sur la première surface de la feuille élastomère (21, 21a, 21b, 21c, 21d, 21e, 21f).

26. Capteur électrostatique (20, 20a, 20b, 20e, 20f) selon la revendication 24, comprenant :
une deuxième feuille d'électrode (25b) agencée sur une deuxième surface de la feuille élastomère (21, 21a, 21b, 21c, 21d, 21e, 21f) opposée à la première surface.

27. Capteur électrostatique (20, 20a, 20b, 20e, 20f) selon la revendication 24, comprenant :
une feuille chauffante agencée sur une deuxième surface de la feuille élastomère (21, 21a, 21b, 21c, 21d, 21e, 21f) opposée à la première surface, dans lequel un fil chauffant de blindage (22), qui sert à la fois de fil chauffant et de fil de blindage, est intégré dans une feuille de matériau de base (23).

28. Capteur électrostatique (20, 20a, 20b, 20e, 20f) selon la revendication 24, comprenant :
un fil chauffant de blindage (22) attaché à une deuxième surface de la feuille élastomère (21, 21a, 21b, 21c, 21d, 21e, 21f) opposée à la première surface et servant à la fois de fil chauffant et de fil de blindage.
